# EUROPEAN PATENT SPECIFICATION

(11) **EP 3 635 536 B1**
(45) Date of publication and mention of the grant of the patent: **02.08.2023**
(21) Application number: 18738037.3
(22) Date of filing: 06.06.2018
(51) Int. Cl.: G06F 8/71, G06F 11/36, G06F 17/40, G06F 8/30, G06F 9/448, G06F 11/34

(54) **INTEGRATED SYSTEM FOR RULE EDITING, SIMULATION, VERSION CONTROL, AND BUSINESS PROCESS MANAGEMENT**
INTEGRIERTES SYSTEM FÜR REGELBEARBEITUNG, SIMULATION, VERSIONSKONTROLLE UND GESCHÄFTSPROZESSMANAGEMENT
SYSTÈME INTÉGRÉ D'ÉDITION DE RÈGLES, DE SIMULATION, DE CONTRÔLE DE VERSION ET DE GESTION DE PROCESSUS COMMERCIAL

(30) Priority: 06.06.2017 US 201762515845 P; 09.03.2018 US 201815917182
(43) Date of publication of application: 15.04.2020
(60) Divisional application: 23175350.0
(73) Proprietor: Ab Initio Technology LLC, Lexington, MA 02421 (US)
(72) Inventor: STUDER, Scott, Georgetown MA 01833 (US); GOULD, Joel, Arlington MA 02474 (US); WEISMAN, Amit, Bedford MA 01730 (US)
(74) Representative: Herrmann, Daniel
(86) International application number: PCT/US2018/036354
(87) International publication number: WO 2018/226895

(56) References cited:
- WO-A1-2008/124319
- US-A1- 2005 125 794
- US-A1- 2009 083 711
- US-A1- 2009 282 042

## Description

### BACKGROUND

The description relates to an integrated system for editing, simulation, version control, and business process management of rules.

In some examples, a conventional ruleset source code control tool allows a team of software programmers to manage the source code of several rulesets as the rulesets are developed and updated. The source code control tool maintains a central repository of the rulesets. A software programmer may check out a ruleset, use a rule editor to edit the ruleset, and store the ruleset locally on the programmer's computer. When the ruleset is checked out, the ruleset is locked and cannot be edited by another programmer. After the programmer finishes editing the ruleset, the programmer may use a rule simulator to simulate execution of the ruleset by applying the ruleset to test data. When the programmer is satisfied with the changes to the ruleset, the programmer checks in the ruleset.

US 2009/0282042 A1 describes methods and systems for managing the development of data integration projects. Methods operate to manage the development, controlled, release, and analysis of a data integration project by receiving a project, associating the project with two superstates, and storing the project in both a source control system and a relational database according to the values of the two superstates.

### SUMMARY

The present invention relates to a computer-implemented method according to independent claim 1, to a computer-readable medium according to independent claim 17 and to a system according to independent claim 18. Preferred embodiments are described in the dependent claims 2 to 16.

### DESCRIPTION OF DRAWINGS

FIG. 1 is a block diagram of an example of an application development system.
FIG. 2 is a diagram of an example of an integrated user interface.
FIG. 3 is a diagram of an example of an editor interface.
FIG. 4 is a block diagram of an example of an application development system.
FIG. 5 is a diagram of an example of a workspace.
FIGS. 6A to 6D are diagrams of examples of workspaces and editor interface.
FIG. 7 is a block diagram of an example of a non-integrated application development system.
FIG. 8 is a block diagram of an example of a system for executing graph-based computations.
FIG. 9 illustrates computation graphs.
FIG. 10 is a screenshot.
FIG. 11A illustrates transforming input data into output data in a graph-based computation environment.
FIG. 11B illustrates an example of a graph-based computation.
FIG. 12 illustrates a screenshot of generating, displaying and linking data objects stored in a business rule environment.
FIGS. 13 and 14 illustrate a series of wizard screens.
FIGS. 15 and 16 illustrate a series of screens associated an object editor.
FIG. 17 is a flowchart of example operations of generating, displaying and linking data objects stored in a data repository.
FIG. 18 is an example of a tagging specification.
FIGS. 19A and 19B show examples of user interfaces that enable the user of release tags to manage rulesets.
FIG. 19C is a diagram showing an example of permissible transitions among states.
FIG. 20 shows an example of a tagging specification.
FIG. 21 is a diagram of an example of a ruleset approval process.
FIG. 22 is an example of a user interface to enable the use of release tags to manage groups of rulesets.
FIGS. 23A and 23B show screenshots of examples of activity logs associated with business tags.
FIGS. 24 and 25 are examples of screenshots of user interfaces for managing rules.
FIG. 26 a flow diagram of an exemplary process for the generation of business rules for a campaign.
FIG. 27 is a flow diagram of an exemplary process for implementing the step for data preparation.
FIG. 28 is a flow diagram of an exemplary process for authoring and validation of campaign products.
FIG. 29 is a flow diagram of an exemplary process for implementing an overlap process.
FIG. 30 is an example of spreadsheet-based rule entry.
FIG. 31 shows examples of test results.
FIG. 32 shows examples of a rule and corresponding test results.

### DESCRIPTION

In this document, we describe a novel integrated application development system for editing rules, simulating execution of application programs that incorporate the rules, managing and controlling multiple versions of the rules and multiple versions of containers of various combinations of the rules, and managing business processes for authoring, reviewing, risk-checking, and approving the rules. The integrated application development system provides an integrated user interface that enables users to perform the functions mentioned above in a convenient and efficient manner. In some implementations, the integrated application development system provides intuitive user interfaces that enable business people to develop sophisticated application programs that incorporate complex rules for processing records of, e.g., millions or billions of customers without requiring the business people to have deep knowledge about software programming. The integrated application development system enables the business people to efficiently author, revise, test, and optimize the rules so that businesses can launch new marketing or business campaigns frequently and respond quickly to changes in customer preferences, market conditions, and/or business environments.

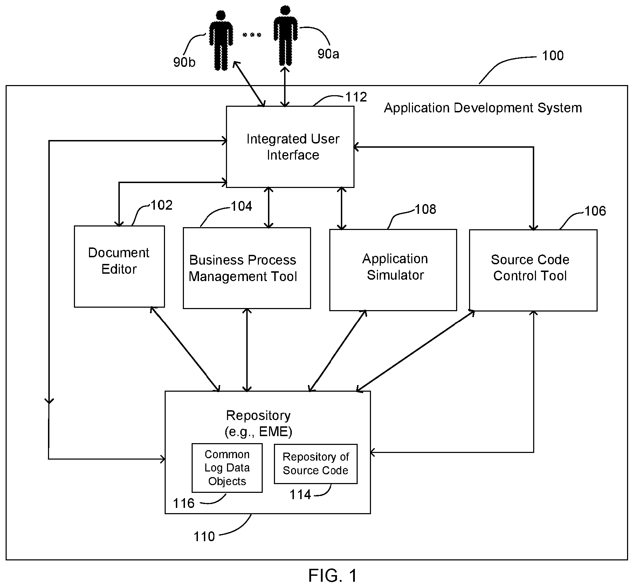

Referring to FIG. 1, in some implementations, an application development system 100 facilitates processes for developing business rules, e.g., rules that can be used by airline companies, credit card companies, and/or online market retailers to assist in determining what products or promotional offers to give to customers, and/or which customers are eligible for which rewards. For example, credit card companies can use business rules to assist in detecting potential fraudulent credit card transactions. Banks can use business rules to assist in detecting potential money laundering and fraudulent monetary transactions. Banks can also use business rules to assist in determining credit risks, loan eligibility, and interest rates for customers. Insurance companies can use business rules to assist in determining which customers are eligible for which programs, and what insurance rates to apply to customers.

In some implementations, the application development system 100 includes a document editor 102, a business process management tool 104, a source code control tool 106, and an application simulator 108. The system 100 includes a repository of data (e.g., enterprise metadata) 110 that can be accessed by the above tools 102, 104, 106, and 108. The system 100 includes one or more common log data objects 116 that store log information provided by the tools 102, 104, 106, and 108. One or more users 90 can access the document editor 102, business process management tool 104, source code control tool 106, application simulator 108, and the one or more common log data objects 116 using an integrated user interface 112. For example, a log data object can include a file, a message, a report, and/or a record. A log data object can include a field in a file, a message, a record, and/or a report. A log data object can be linked to or associated with a particular ruleset or rule container, such that the user 90 can easily access all the logged information associated with the ruleset or rule container.

In some implementations, a user 90 uses input devices (e.g., keyboard, mouse, microphone) of one or more computers to provide inputs to the integrated user interface 112, and the integrated user interface 112 provides outputs to the user 90 using output devices (e.g., one or more displays and speakers) of the one or more computers. The integrated user interface 112 can show information generated by modules executing on one or more computers. Other input/output devices, and other modes of interactions between the user 90 and the integrated user interface 112, can also be used and will be described in later sections of this document.

The integrated user interface 112 has user-side components and server-side components. For example, the user 90 uses one or more web browsers to access the tools 102, 104, 106, and 108. The web browser includes widgets that exchange data with the server-side components and render interactive graphical elements that are displayed on one or more web pages shown to the user 90. Multiple users can use web browsers to access the tools 102, 104, 106, and 108 concurrently. The integrated user interface 112 provides an interface for each of the users 90 to enable the user 90 to interact with the tools 102, 104, 106, and 108. For example, a first user 90a can use a web browser to access the document editor 102 to edit a first ruleset, and access the business process management tool 104 to submit the first ruleset for approval. A second user 90b can use a web browser to access the document editor 102 to review the first ruleset, access the application simulator 108 to perform a simulation of execution of an application program that incorporates the first ruleset, and access the business process management tool 104 to approve the first ruleset for release. A third user 90c (not shown in the figure) can use a web browser to access the source code control tool 106 to add the first ruleset to a rule container. A fourth user 90d (not shown in the figure) can use a web browser to access the source code control tool 106 to make a new version of the ruleset and access the document editor 102 to modify the new version of the ruleset, and so forth. The integrated user interface 112 allows multiple users to collaborate on developing rulesets using an interface that has a consistent look-and-feel when accessing different tools (e.g., 102, 104, 106, and 108).

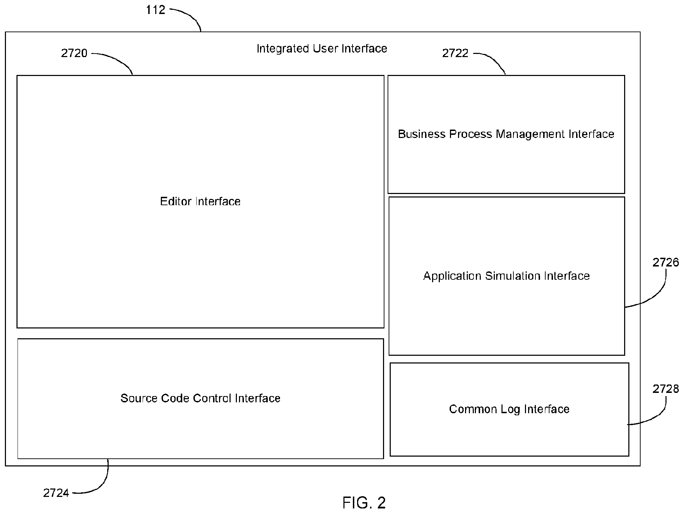

Referring to FIG. 2, in some implementations, the integrated user interface 112 includes an editor interface 2720, a business process management interface 2722, a source code control interface 2724, an application simulation interface 2726, and a common log interface 2728. The interfaces 2720, 2722, 2724, 2726, and 2728 can include interactive graphical elements shown on one or more web pages. The editor interface 2720 allows the user to access the document editor 102. For example, the editor interface 2720 can show the rule specification to be edited, and provide tools for the use to edit the rule specification.

In some implementations, when a first user edits a ruleset stored in the repository 114, the user accesses the source code control tool 106 to check out the ruleset. The user accesses the document editor 102 to edit the ruleset. When the ruleset is in the "open" or "development" state, the document editor 102 stores a copy of the ruleset in a "sandbox" that can only be access by the first user (or other authorized users). The sandbox allows the first user to experiment with various parameters of the ruleset without affecting a production environment or the source code in the repository 114. When the first user finished modifying the ruleset, the first user submits or publishes the ruleset, a copy of the ruleset is stored in the repository 110, and the state of the ruleset is changed to "submitted" or "published." At this time, other users can view, edit, simulate, approve, and/or perform other processing on the modified ruleset.

The business process management interface 2722 allows the user to access the business process management tool 104. For example, the interface 2722 can show the current state of the rule being edited in the editor interface 2720, and possible target states that the rule can transition to. The business process management interface 2722 can also show the current and target states of other rules related to the rule being edited in the editor interface 2720. The business process management interface 2722 can show the state or states of the container or containers that include the selected version of the ruleset. The business process management interface allows the user to transition the selected version of the ruleset from one state to another state, such as promoting the selected version of the ruleset from "Development" state to "Testing" state, or demoting the selected version of the ruleset from "Testing" state to "Development" state.

The source code control interface 2724 allows the user to access the source code control tool 106. For example, the source code control interface 2724 can show a list of the various versions of the rule being edited in the editor interface 2720. The source code control interface 2724 enables the user to manage various versions of the rule containers and rulesets. The user can select a particular version of a particular ruleset using this interface, and the selected version of the ruleset can be edited in the editor interface 2720. The source code control interface 2724 can show information regarding which user checked out the particular version of the ruleset from the repository 114, and a timestamp showing when the particular version of the ruleset was checked out from the repository 114.

The application simulation interface 2726 allows the user to access the application simulator 108 to simulate execution of an application program that incorporates the selected version of the ruleset that is being edited in the editor interface 2720 to process input data and produce output data. The application simulation interface 2726 also allows the user to retrieve stored output data produced from a prior simulated execution of the application program using the selected version of the ruleset.

Simulating execution of an application program using test data allows developers of the ruleset to identify and correct potential problems that may occur when the application program incorporating the ruleset is executed using actual data in a live or production environment, such as applying the application program incorporating the ruleset to production data (e.g., actual customer data) to produce results. In the following, depending on context, the phrase "results of execution of the application program" can mean results from simulation of execution of the application program using test data, or results from execution of the application program using production data.

The common log interface 2728 allows the user to access the common log data object 116. For example, the common log interface 2728 can show logged information having timestamps within a certain period of time.

Depending on which functions of the application development system 100 are being accessed by the user, one or more of the editor interface 2720, business process management interface 2722, source code control interface 2724, application simulation interface 2726, and common log interface 2728, or portions of them, can be shown on the display screen to the user. For example, the user can access the functions of two or more of the tools 102, 104, 106, and 108 in a concurrent manner. The integrated user interface 112 may include a combination of two or more of the interfaces 2720, 2722, 2724, 2726, and 2728, or portions of them, that are presented to the user concurrently.

FIG. 2 shows the editor interface 2720, business process management interface 2722, source code control interface 2724, application simulation interface 2726, and common log interface 2728 as distinct components. However, two or more of the interfaces 2720, 2022, 2724, 2726, and 2828 can be combined as one module. Portions of two or more of the interfaces 2720, 2022, 2724, 2726, and 2828 can be combined as one module. Each of the interfaces 2720, 2022, 2724, 2726, and 2828 can have two or more sub-modules.

For example, when two users 90a, 90b concurrently use the application development system 100, the integrated user interface 112 can include a first graphical user interface that is shown at the computer display of the first user 90a and a second graphical user interface that is shown at the computer display of the second user 90b. Each of the first and second graphical user interfaces can include one or more of the editor interface 2720, business process management interface 2722, source code control interface 2724, application simulation interface 2726, and common log interface 2728, or portions of them. Similarly, if there are additional users who concurrently access the application development system 100, the integrated user interface 112 can include additional interfaces that are shown at the computer displays of the additional users.

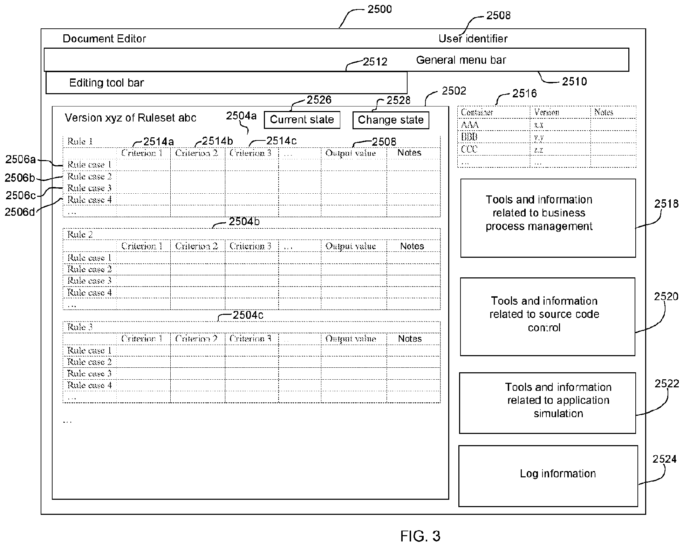

Referring to FIG. 3, in some implementations, an editor interface 2500 can include components (e.g., interactive items such as buttons, menus, links, and input boxes) for accessing the business process management tool 104, the source code control tool 106, the application simulator 108, and the common log data object 116. For example, when the user 90 executes the document editor 102 to edit a particular version (e.g., version "xyz") of a particular ruleset (e.g., ruleset "abc"), the application development system 100 provides the editor interface 2500 and shows the rule specification for the particular version of the particular ruleset. FIG. 3 shows examples of components of the editor interface 2500. The editor interface 2500 can have fewer or more components than those shown in the figure.

For example, the editor interface 2500 can show the identifier 2508 of the user who is viewing or editing the ruleset. The editor interface 2500 can include a general menu bar 2510 that has general menus, such as, e.g., a menu for file management, a menu for editing tools, and a help menu. The editor interface 2500 can have an editing tool bar 2512 that includes various editing tools, such as, e.g., a copy tool, a paste tool, and a delete tool. The editor interface 2500 can show the rules (e.g., 2504a, 2504b, 2504c) of the ruleset being edited. Each rule (e.g., 2504a) can include one or more rule cases (e.g., 2506a, 2506b, 2506c, 2506d) that compute values for the rule's output 2508 depending on the rule's input, and each rule case includes one or more input relationships or criterion (e.g., 2514a, 2514b, 2514c) in which a rule case is triggered by a given input record if one or more data values of the given input record meet the one or more input relationships.

The editor interface 2500 can show the current state 2526 of the ruleset, and a tool 2528 to allow the user to change the state of the ruleset. For example, the tool 2528 can be a menu that has a list of target states for which the ruleset can transition to. The tool 2528 can include one or more buttons representing the target states that the ruleset can transition to. The editor interface 2500 can have a section 2516 that shows the rule containers that include the ruleset. In this example, version x.x of container AAA, version y.y of container BBB, and version z.z of container CCC include version xyz of ruleset abc. The editor interface 2500 can have a section 2518 that shows tools and information related to the business process management tool 104. For example, the section 2518 can include tools that can be used to edit a tagging specification that specifies the permissible transitions of the tags among the states. The tagging specification will be described in more detail in later sections of this document.

The editor interface 2500 can have a section 2520 that shows tools and information related to the source code control tool 106. For example, the section 2520 can include tools that can be used to modify the version of the rule, generate a new version of the rule, or delete an old version of the rule. The editor interface 2500 can include a section 2522 that shows tools and information related to the application simulator 108. For example, the section 2522 can show results of simulating execution of an application program that incorporates the rule to process input records. The editor interface 2500 can include a section 2524 that shows tools and information related to the common log data object 116. For example, the section 2522 can show log information related to the version xyz of the ruleset abc, in which the log information can be written by the tools 102, 104, 106, and/or 108.

In some implementations, the business process management interface 2722 can include interactive items (e.g., buttons, menus, links, input boxes) that allow the user 90 to access one or more of the other modules, such as the document editor 102, the source code control tool 106, the application simulator 108, and the common log data object 116. The source code control interface 2724 can include interactive items (e.g., buttons, menus, links, input boxes) that allow the user 90 to access one or more of the other modules, such as the document editor 102, the business process management tool 104, the application simulator 108, and the common log data object 116. The application simulation interface 2726 can include interactive items (e.g., buttons, menus, links, input boxes) that allow the user 90 to access one or more of the other modules, such as the document editor 102, the business process management tool 104, the source code control tool 106, and the common log data object 116. The common log interface 2728 can include interactive items (e.g., buttons, menus, links, input boxes) that allow the user 90 to access one or more of the other modules, such as the document editor 102, the business process management tool 104, the source code control tool 106, and the application simulator 108.

In this document, an "integrated" user interface refers to a user interface that enables the user to access (i) two or more of the document editor 102, business process management tool 104, source code control tool 106, and application simulator 108, or (ii) functions associated with two or more of the above tools 102, 104, 106, 108, in which the two or more of the above tools 102, 104, 106, 108 share one or more common log data objects 116. The integrated user interface can refer to a graphical user interface that is shown on one or more displays that are controlled by one or more computers. The integrated user interface can show information generated by modules executing on one or more computers.

Referring back to FIG. 1, each of the document editor 102, business process management tool 104, source code control tool 106, and application simulator 108 can write information to the common log data object 116. For example, the source code control tool 106 can write in the common log data object 116 information specifying that a user associated with a particular user identifier checked out a particular version of a particular ruleset from the repository 110, and a timestamp specifying the timing that the ruleset was checked out. The document editor 102 can write in the common log data object 116 information about the user identifier associated with the user who edited the ruleset, and a timestamp specifying the timing for when the editing was performed.

The business process management tool 104 can write in the common log data object 116 information specifying that the user associated with the particular user identifier approved the transition of the ruleset from a first state to a second state, and a timestamp specifying the timing for the transition of states. The application simulator 108 can write in the common log data object 116 information specifying that the user associated with the particular user identifier executed an application program using the ruleset to produce outputs, and a timestamp specifying the timing of the execution of the application program incorporating the ruleset. The application simulator 108 can write in the common log data object 116 information specifying that the user associated with the particular user identifier retrieved stored outputs produced from a prior execution of the application program using the particular version of the particular ruleset, and a timestamp specifying the timing of the retrieval of the stored outputs. The above are just examples of the kind of information that the tools 102, 104, 106, and 108 can write to the common log data object 116. The tools 102, 104, 106, and 108 can also write other types of information to the common log data object 116. Logging information regarding, e.g., who accessed which rules, who edited which rules, who approved which rules, and when the above events occurred can help a company perform audits at a later time, e.g., to comply with legal requirements or identify potential sources of errors.

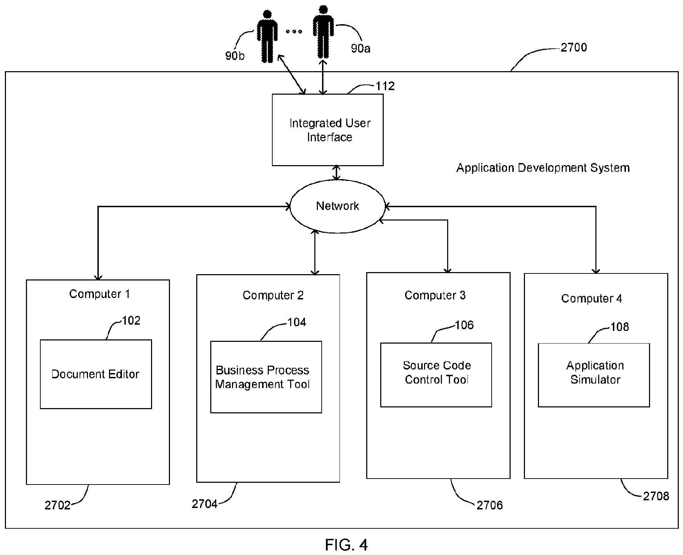

Referring to FIG. 4, in some implementations, an application development system 2700 is executed in a distributed computing environment that includes, e.g., a group of computer servers or processors connected through a communication network, e.g., a wide area network (WAN), a local area network (LAN), or a network in a multiprocessor system or on a chip. Different tools are executed on different computers or processors. In this example, the document editor 102 is executed on a first computer 2702, the business process management tool 104 is executed on a second computer 2704, the source code control tool 106 is executed on a third computer 2706, and the application simulator 108 is executed on a fourth computer 2708. One or more users 90 interact with the document editor 102, business process management tool 104, source code control tool 106, and the application simulator 108 through the integrated user interface 112. Regardless of whether the tools 102, 104, 106, and 108 are executed on the same or different server computers, the integrated user interface 112 provides a user-friendly interface that hides the complexities of the back-end processes.

Referring back to FIG. 1, in some implementations, the document editor 102 can be linked to, or integrated with, the business process management tool 104, which manages the states of the rules using, e.g., tags described below. When the document editor 102 modifies a rule, the modification can propagate to the business process management tool 104 and affect the outputs of the tool 104. In some examples, the outputs of the business process management tool 104 are updated automatically in response to changes made by the document editor 102. In some examples, the user has to manually request that the changes made by the document editor 102 be propagated to the business process management tool 104.

Similarly, the document editor 102 can be linked to, or integrated with, the source code control tool 106 so that, e.g., when a version of the rule is approved for release, that version of the rule is stored by the source code control tool 106, which maintains a master repository 114 of various versions of the rules. The document editor 102 can be linked to, or integrated with, the application simulator 108, which enables simulation of execution of application programs that incorporate the business rules. When the document editor 102 modifies a rule, the modification can propagate to the application simulator 108 and affect the outputs of the simulator 108. In some examples, modification of the rule triggers execution of the application simulator 108, and the outputs of the simulator 108 are updated automatically. In some examples, the user has to manually request execution of the application simulator 108 after the rule has been modified by the document editor 102 in order to obtained updated output from the simulator 108.

The business process management tool 104 can be linked to, or integrated with, the source code control tool 106, which enables the user to retrieve any version of the rule, determine the state of the rule, and modify the state of the rule using the integrated user interface 112. The business process management tool 104 can be linked to, or integrated with, the application simulator 108, which enables the user to use the integrated user interface 112 to modify the state of a rule after performing simulation of the execution of an application program incorporating the rule. The source code control tool 106 can be linked to, or integrated with, the application simulator 108, which enables the user to use the integrated user interface 112 to incorporate any version of a rule into an application program and perform a simulation of the execution of the application program incorporating the rule.

The integrated user interface 112 allows the users 90 to access the document editor 102, the business process management tool 104, the source code control tool 106, the application simulator 108, and the common log data object 116 using interfaces that have a consistent look-and-feel, e.g., having similar overall design, color scheme, menu structure, and font characteristics.

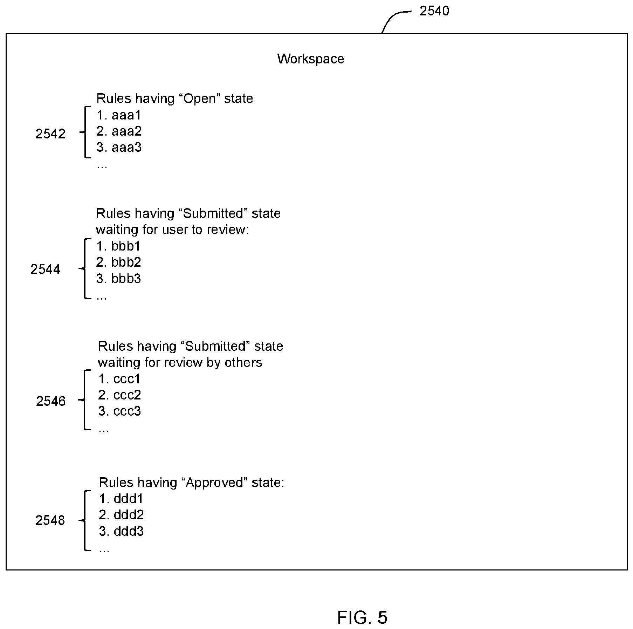

The integrated user interface 112 can simplify tasks for processing business rules. For example, referring to FIG. 5, the application development system 100 can implement a "workspace" 2540 for each user that shows the work items that need to be processed by the user. The workspace 2540 can show a first work queue that includes a first list of rules 2542 in "open" state, meaning that the rules are draft documents that are still being edited. The workspace 2540 can show a second work queue that includes a second list of rules 2544 in "submitted" state, which indicates that the rule is ready for review. The second list includes rules that are ready for review by the user. The workspace 2540 can show a third list of rules 2546 in the "submitted" state, in which the rules have been edited by the user and are ready for review by others. The workspace 2540 can show a fourth list of rules 2548 in "approved" state, in which the rules have been edited by the user and have been approved.

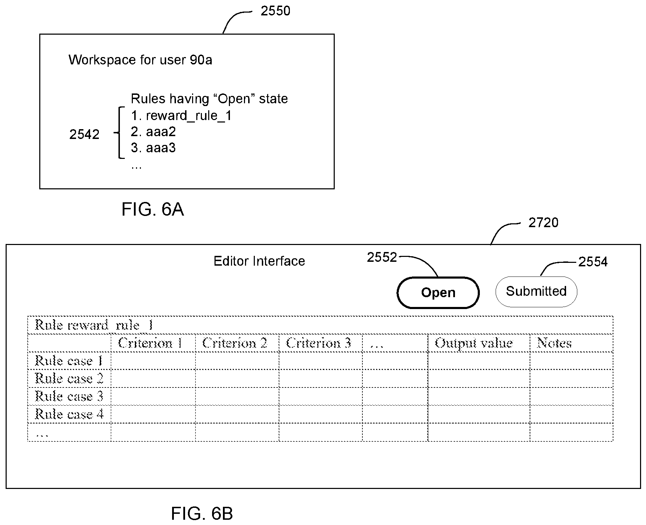

The following describes an example in which a first user 90a edits a rule named "reward_rule_1" and a second user 90b reviews the rule. Referring to FIG. 6A, for example, when the first user 90a logs in the workspace 2550 associated with the first user 90a, the user sees the rule "reward_rule_1" in the first list of rules 2542 that are in the "open" state. Referring to FIG. 6B, the first user 90a can double-click on the rule "reward_rule_1" and invoke the document editor 102, causing the editor interface 2720 to be presented to the first user 90a and allow the first user 90a to edit the selected rule "reward_rule_1." The editor interface 2720 can show the current state "Open" 2552 and a "Submitted" button 2554 next to the rule being edited. After the first user 90a finishes editing the rule "reward_rule_1," the first user 90a can click on the "Submitted" button 2554 to change state of the rule "reward_rule_1" from "open" to "submitted."

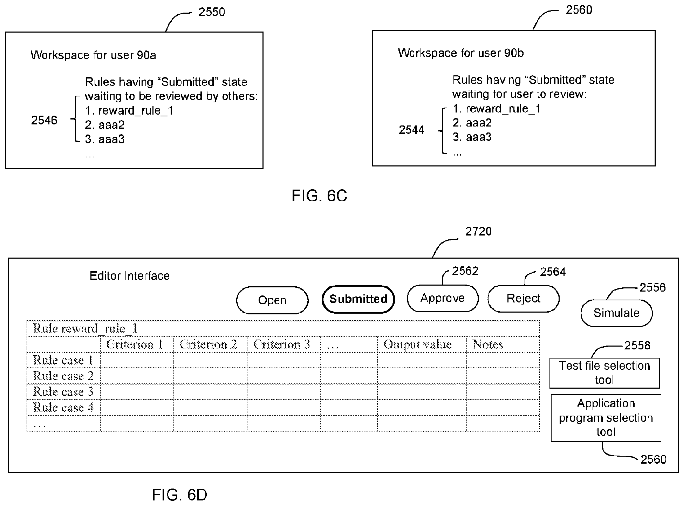

Referring to FIG. 6C, after the first user 90a changes the state of the rule "reward_rule_1" from "open" to "submitted," the rule "reward_rule_1" appears in the third list of rules 2546 in the workspace 2550 of the first user 90b, indicating that the rule is waiting to be reviewed by others. At the same time, the rule "reward_rule_1" appears in the second list of rules 2544 in the workspace 2560 of the second user 90b, who is responsible for reviewing the rules submitted by the first user 90a.

For example, the second user 90b logs in the workspace 2560 associated with the second user 90b and sees that the rule "reward_rule_1" appears in the second list of rules 2544 waiting to be reviewed. Referring to FIG. 6D, the second user 90b can double click on the rule "reward_rule_1" to invoke the document editor 102 in order to review the rule. The editor interface 2720 can show next to the rule a "Simulate" button 2556, a test file selection tool 2558 to allow selection of a test input file, and an application program selection tool 2560 to allow selection of an application program for simulation. The second user 90b can select a test input file "test_input_1" and an application program "application_1" and click on the "Simulate" button, causing the system 100 to invoke the application simulator 108. The application simulator 108 converts the rule cases in the rule "reward_rule_1" to a plurality of logical expressions, compiles the plurality of logical expressions into computer-executable code, incorporates the computer-executable code into the application program "application_1," and executes the application program "application_1" to use the "reward_rule_1" to process test input records in the "test_input_1" file and generate output data.

The editor interface 2720 can show an "Approve" button 2562 and a "Reject" button 2564 next to the rule "reward_rule_1." If the second user 90b is satisfied that the output data from the simulation are correct, the second user 90b can click on the "Approve" button 2562 to approve the rule "reward_rule_1" and change the state of the rule from "submitted" to "approved." If the second user 90b thinks the rule has problems, the second user 90b can click on the "Reject" button 2564 to reject the rule "reward_rule_1" and change the state of the rule from "submitted" to "open."

Let's assume that the second user 90b rejects the rule. The editor interface can show a text input box next to the rule "reward _rule_1" to allow the second user 90b to write a comment, which is stored in the common log data object 116. In this example, the second user 90b writes a comment "rewards too high" indicating that the reason for rejecting the rule "reward_rule_1" is because the rewards are too high. After the state of the rule "reward_rule_1" is changed to "open," the rule "reward_rule_1" appears in the first work queue of the first user 90a.

The first user 90a sees that the rule "reward_rule_1" has been rejected and returned to the "open" state. The system 100 retrieves the comments related to the rule "reward_rule_1" from the common log data object 116 and displays the comments next to the rule "reward_rule_1." The first user 90a sees the comment "rewards too high," invokes the document editor 102 to revise the rule cases to reduce the amount of rewards, and invokes the application simulator 108 to simulate execution of the rule. The first user 90a selects the application program "application_1" and the test file "test_input_1" for simulation. The application simulator 108 converts the revised rule cases in the rule "reward_rule_1" to a plurality of logical expressions, compiles the plurality of logical expressions into computer-executable code, incorporates the computer-executable code into the application program "application_1," and executes the application program "application_1" to use the revised "reward_rule_1" to process the test input records in the "test_input_1" file and generate output data. The application simulator 118 saves the output data. The first user 90a reviews the output data, confirms that the rewards have been correctly reduced, and changes the state of the rule "reward_rule_1" from "Open" to "Submitted" again.

The second user 90b sees that the first user 90a re-submitted the rule "reward_rule_1" and invokes the application simulator 108 to check whether the rewards have been correctly reduced. The second user 90b selects the application program "application_1" and the test file "test_input_1" for simulation. The application simulator 108 determines that a previous simulation was performed in which the rule "reward_rule_1" was incorporated into the application program "application_1" and the "test_input_1" file was used for the test input. The application simulator 108 loads the previously generated output data and presents the output data to the second user 90b.

The second user 90b reviews the previously generated output data and confirms that the rewards have been correctly reduced, determines that there are no other issues with the rule "reward_rule_1," and clicks on the "Approved" button next to the rule. After the state of the rule "reward _rule_1" is changed from "submitted" to "approved," the first user 90a sees in the workspace 2550 that the rule "reward_rule_1" appears in the fourth list of rules 2548 that have been approved.

In the above example of processing of the rule "reward_rule_1" by the first and second users, the document editor 102, the business process management tool 104, and the application simulator 108 were invoked with only a few clicks by the users. The integrated user interface 112 is configured such that when processing the rules, appropriate interactive elements (e.g., buttons, menus, links, input text boxes) are provided to enable the users to conveniently access the document editor 102, the business process management tool 104, the source code control tool 106, the application simulator 108, and/or the common log data object 116.

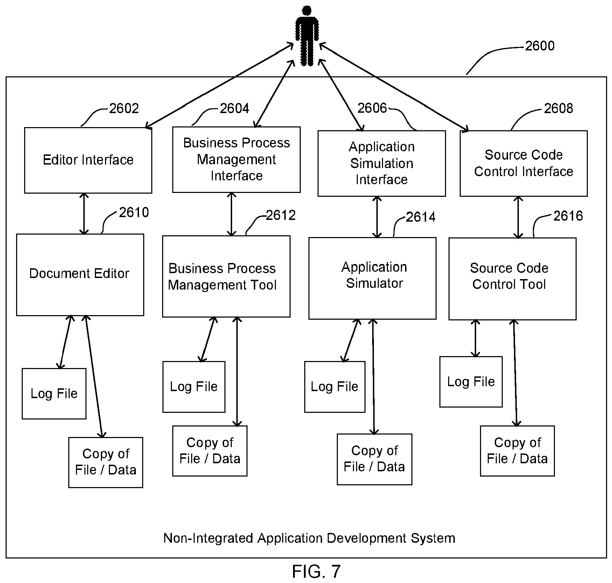

As described in more detail below, the application development system 100 has several improvements over a non-integrated application development system, such as system 2600 shown in FIG. 7. For example, the non-integrated application development system 2600 may be built by bundling separate tools together as an application suite in which the separate tools do not share a common set of user interfaces, and do not share a common log data object. For example, the system 2600 can include a document editor 2610 that is accessed through an editor interface 2602, a business process management tool 2612 that is accessed through a business process management interface 2604, an application simulator 2614 that is accessed through an application simulation interface 2606, and a source code control tool 2616 that is accessed through a source code control interface 2608. Each tool 2610, 2612, 2614, and 2616 in the non-integrated application development system 2600 has its own user interface (2602, 2604, 2606, and 2608, respectively), and the look-and-feel of different interfaces of different tools in the system 2600 can be different.

For example, when the different tools (e.g., 2610, 2612, 2614, 2616) in the system 2600 store files to non-volatile storage devices, the different tools can store the files to different local file directories associated with the tools. Thus, for example, in system 2600, if the document editor 2610 is executed on a first computer "Comp_1," the document editor 2610 can save working documents to a local file directory, such as "Comp_1\usr\doc_editor\working file\". In system 2600, if the business process management tool 2612 is executed on a second computer "Comp _2," the business process management tool 2612 can save working documents to a local file directory, such as "Comp_2\usr\bpm\working_file\". In the system 2600, if the source code control tool 2616 is executed on a third computer "Comp_3," the source code control tool 2616 can save working documents to a local file directory, such as "Comp_3\usr\source_code_control\working_file\". In the system 2600, if the application simulator 2618 is executed on a fourth computer "Comp _4," the application simulator 2618 can save working documents to a local file directory, such as "Comp_4\usr\app_sim\working_file\".

In system 2600, the document editor 2610 may not know where the working files of the business process management tool 2612, the source code control tool 2616, and the application simulator 2614 are stored. Similarly, in system 2600, the application simulator 2614 may not know where the working files of the document editor 2600, the business process management tool 2612, and the source code control tool 2616 are stored. Thus, in the system 2600, the user needs to spend time to navigate among different working file directories in order to access the needed files. In the system 2600, the user may have to spend effort setting up correct file paths in order for the different tools to know the locations of the working file directories of the other tools.

By comparison, the system 100 has an integrated user interface 112 that allows the user to conveniently access the working files of the various tools when processing the rules without the need to remember the details of the working file directories of the various tools 102, 104, 106, 108, and 116.

For example, the application development system 100 can have other advantages compared to the non-integrated system 2600. For example, the application development system 100 has reduced memory requirements (as compared to the system 2600) because the tools 102, 104, 106, and 108 access the same data stored in memory, reducing the need to duplicate data, which may be needed in the system 2600. As shown in FIG. 7, each of the document editor, business process management tool, application simulator, and source code control tool store copies of files and data locally. The system 100 has a common log data object 116 that can be accessed by the tools 102, 104, 106, and 108, such that information entered into the common log data object 116 by one of the tools 102, 104, 106, and 108 can be accessed by another one of the tools 102, 104, 106, and 108. By reviewing the common log data object 116, the user can determine, e.g., who accessed, edited, approved, and/or simulated a particular version of a particular rule container or ruleset, and when those events happened. This is more convenient than the system 2600 in which each tool writes to its own log file. In system 2600, the user has to access multiple log files in order to obtain information about who accessed, edited, approved, and/or simulated a particular version of a rule container or ruleset, and when those events happened.

The system 100 can have an advantage in which the integrated user interface 112 enables the user to access functions of two or more of the tools 102, 104, 106, 108, and 116, and the outputs of two or more of the tools 102, 104, 106, 108, and 116 can be provided to the user, e.g., shown side by side. Changes made to data processed by one of the tools 102, 104, 106, and 108 can automatically trigger the update of outputs generated by another one of the tools 102, 104, 106, and 108.

For example, in FIG. 2, the user can select a test input file and an application program using the application simulation interface 2726. The user can edit a rule using the editor interface 2720. In some implementations, as the user modifies the rule, the application development system 100 automatically invokes the application simulator 108 to convert the rule cases of the rule to a plurality of logical expressions, compile the plurality of logical expressions into computer-executable code, incorporate the computer-executable code into the selected application program, and executes the selected application program to use the rule to process the test input records and generate output data. The application simulation interface 2726 shows the output data to the user. This provides quick feedback to the user, allowing the user to try several parameter values for the rule cases to find optimal values. In some implementations, the application simulator 108 is configured to wait for an explicit instruction from the user before executing the application program.

In FIG. 1, the document editor 102, the business process management tool 104, the source code control tool 106, and the application simulator 108 are represented as separate modules, this is merely an example. In some examples, two or more of the tools 102, 104, 106, and 108 can be configured as one unit or module. In some examples, the tools 102, 104, 106, and 108 can all be implemented as one integrated module. In some examples, each of the tool 102, 104, 106, and 108 can be implemented by two or more modules. In some examples, several modules may be used in which each module implements a portion of the functions of the tool 102, 104, 106, and/or 108. Each or all or some portions of the tools 102, 104, 106, and 108 may be implemented in software, hardware, or a combination of software and hardware.

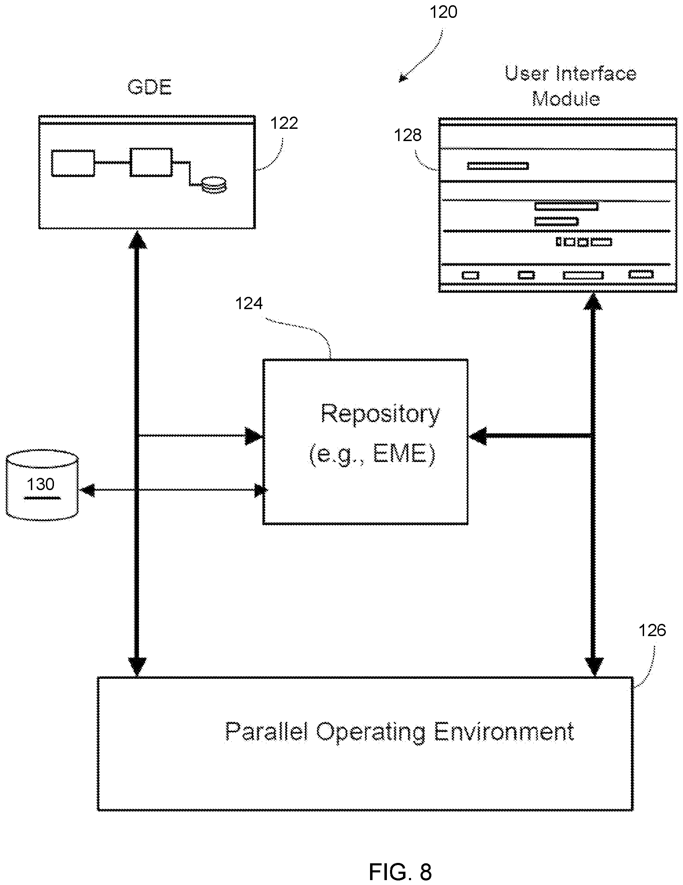

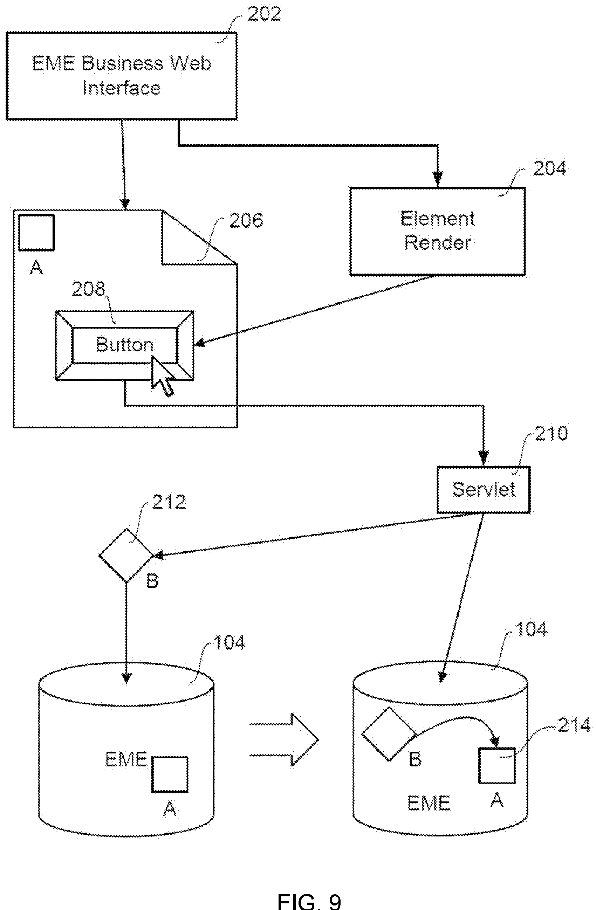

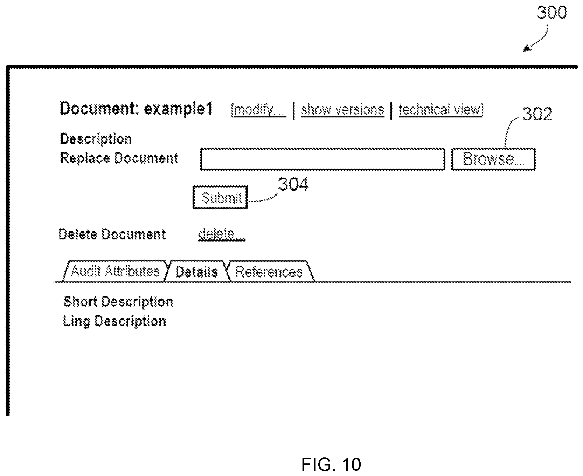

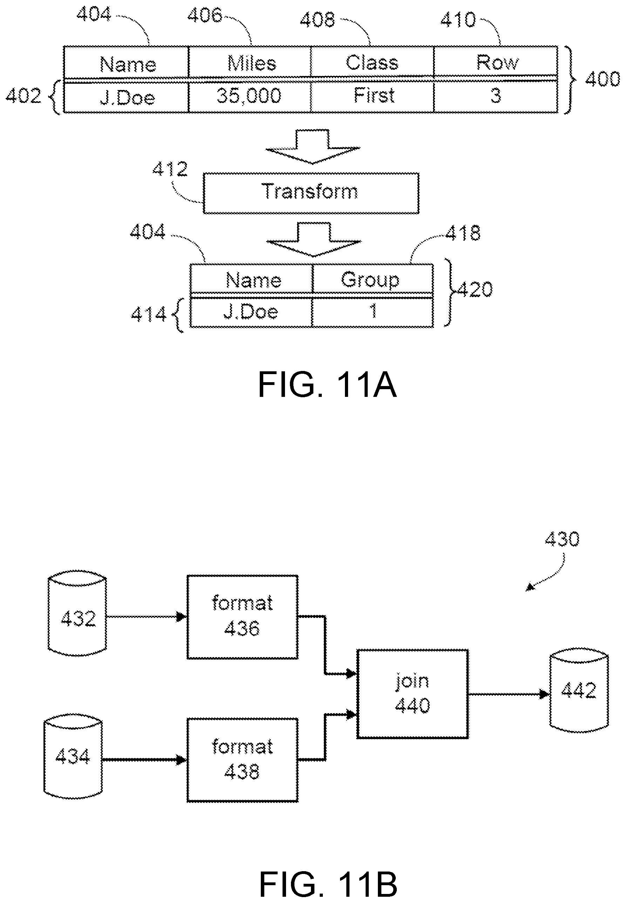

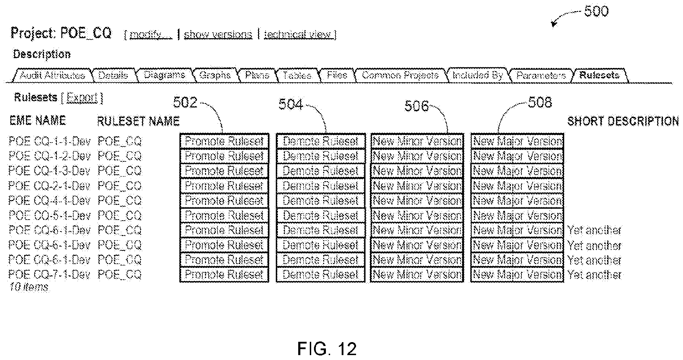

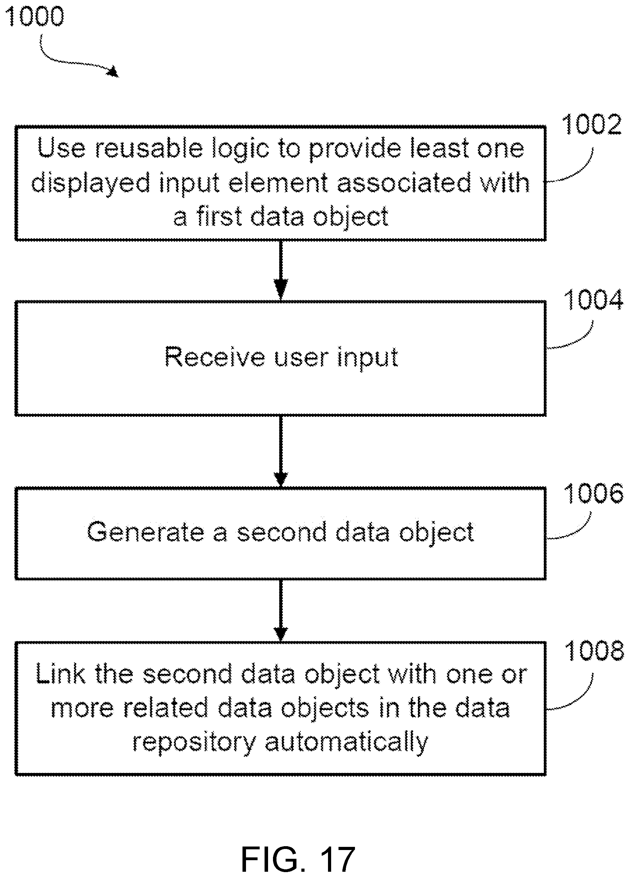

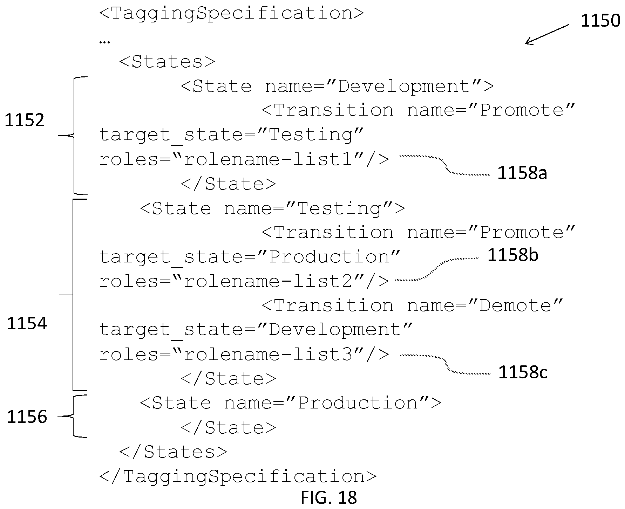

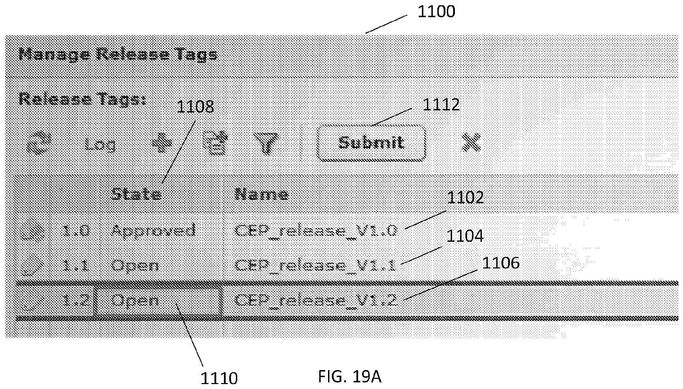

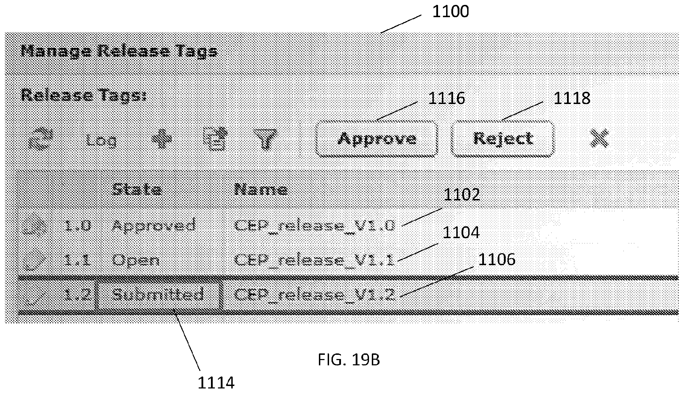

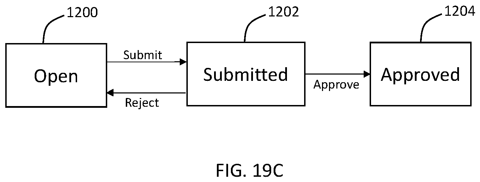

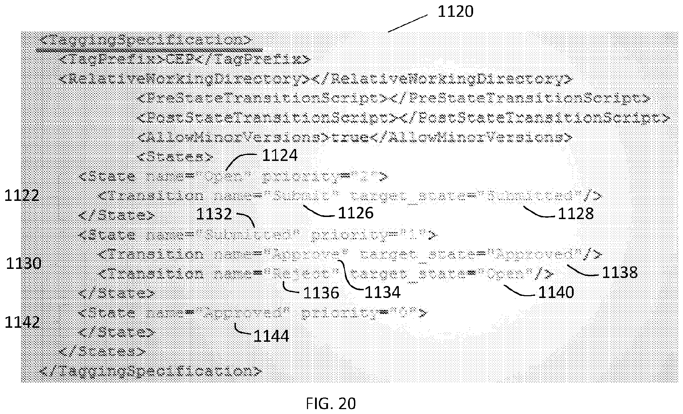

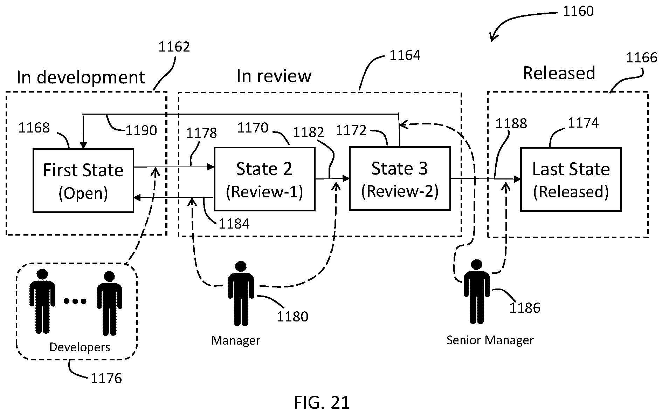

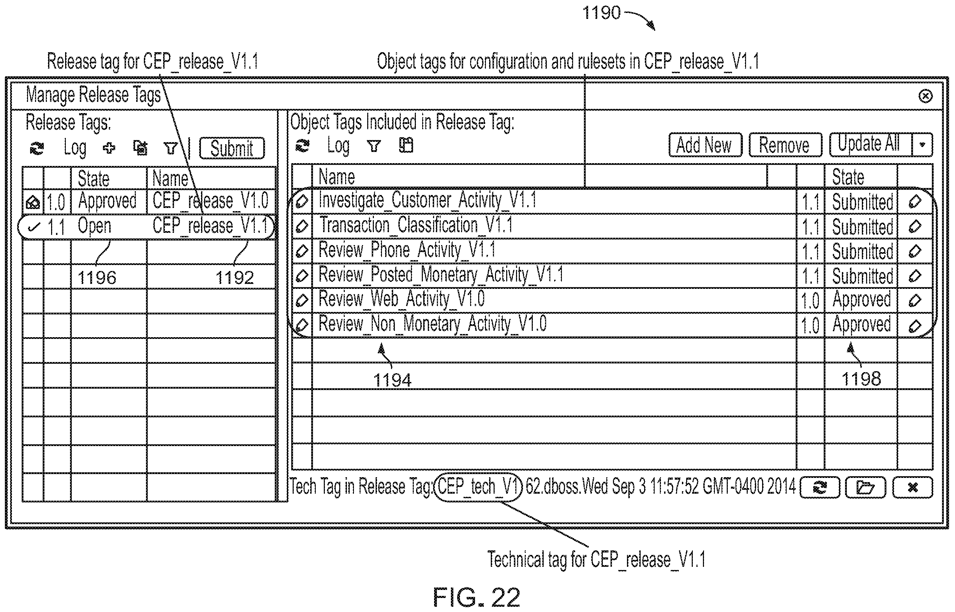

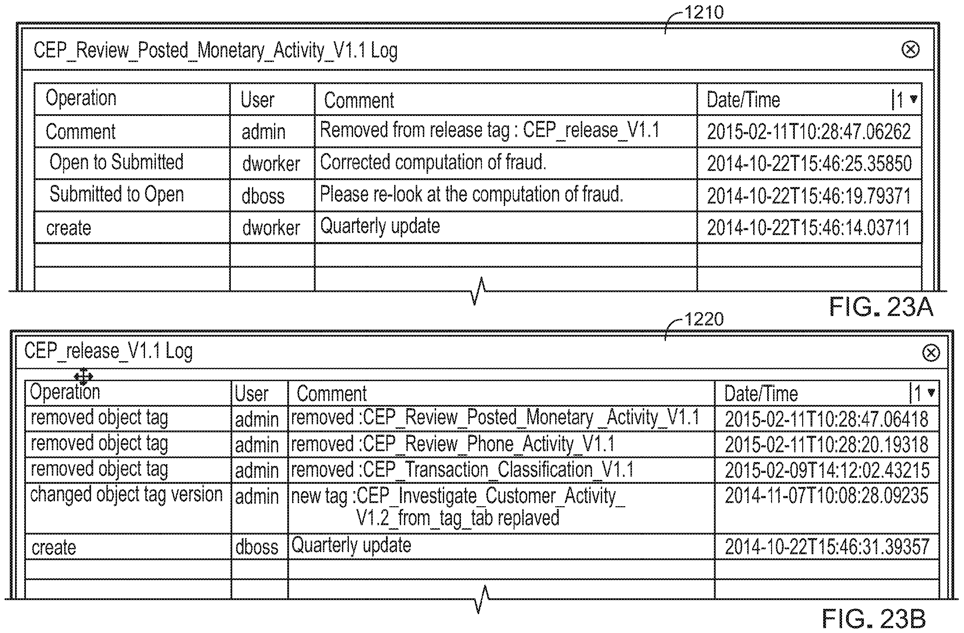

In the following, we first describe a system for executing graph-based computations that can incorporate business rules (FIG. 8), modules that can be used to generate objects in user interfaces for processing business rules, and examples of usages of these modules (FIGS. 9 and 10), examples of business rules (FIG. 11A), examples of computation graphs that can incorporate business rules (FIG. 11B), examples of user interfaces for processing business rules (FIGS. 12-16), examples of processes for linking objects when processing business rules (FIG. 17), examples of tagging specifications having information about business rules (FIGS. 18 and 20), examples of using tags to manage business rules (FIGS. 19A, 19B, 19C), examples of lifecycles of developing business rules (FIG. 21), examples of release tags having information about business rules (FIG. 22), and examples of activity logs (FIGS. 23A and 23B).

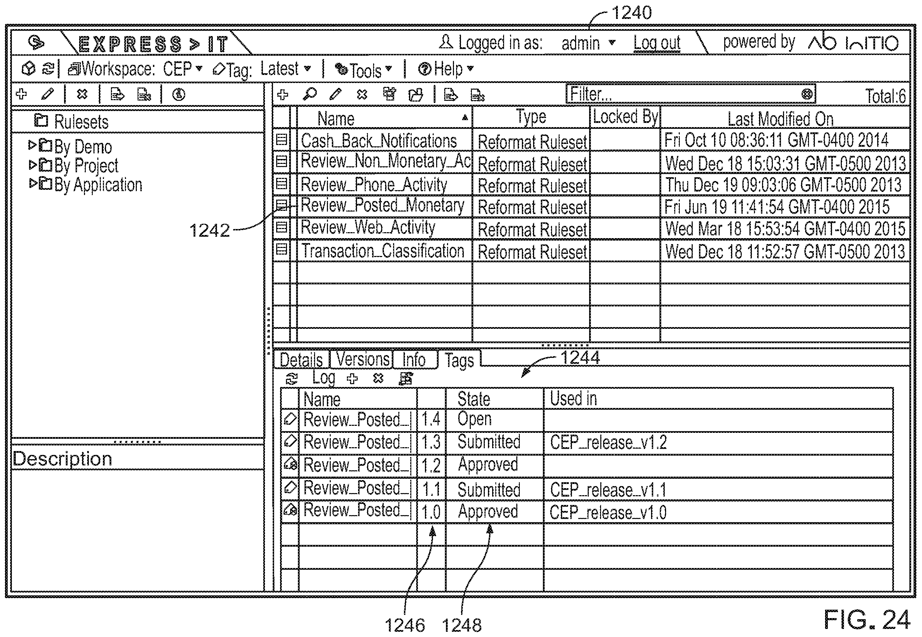

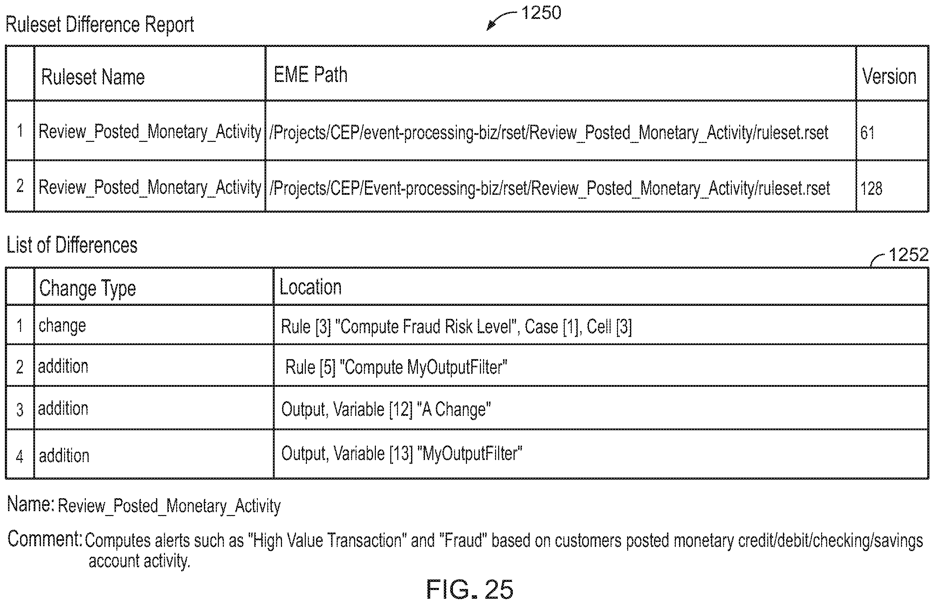

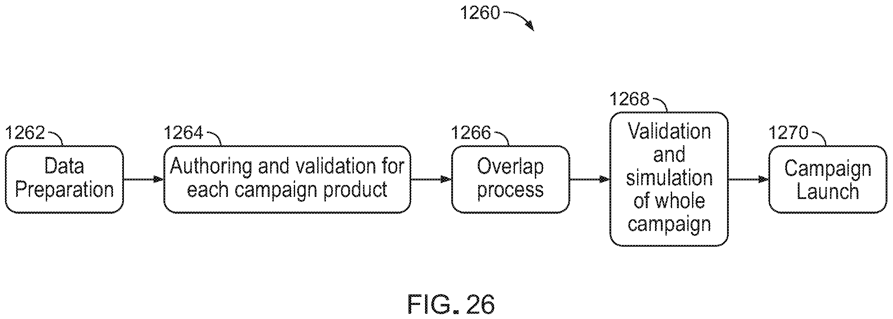

We then describe the modules of the application development system 100 in greater detail, describe how the application development system 100 can be used to develop business rules, describe how the document editor 102 and the source code control tool 106 can provide an integrated user interface to enable users to easily access and edit different versions of rules and compare different versions of rules (FIGS. 24 and 25). We also describe examples of how the application development system 100 can be used in developing business rules that are used in marketing or business campaigns (FIGS. 26-29).

### Graph Based Computations

FIG. 8 is a schematic block diagram showing the interrelationship of parts of a computing system 120 for developing, executing and managing graph-based computations. A graph-based computation is implemented using a "data flow graph" that is represented by a directed graph, with vertices in the graph representing components (e.g., data files, processes, etc.), and the directed links or "edges" in the graph representing flows of data between components. In some examples, a graphic development environment (GDE) 122 provides a user interface for specifying executable graphs and defining parameters for the graph components. The GDE 122 communicates with a repository 124 and a parallel operating environment 126. Also coupled to the repository 124 and the parallel operating environment 126 are a User Interface module 128 and an external data store 130.

The repository 124 preferably is a scalable object-oriented database system designed to support the development and execution of graph-based applications and the interchange of metadata between the graph-based applications and other systems (e.g., other operating systems). In this arrangement, the repository 124 is referred to as Enterprise Meta Environment (EME) and is capable of storing one or more types of metadata, including documentation, record formats (e.g., fields and data types of records in a table), transform functions, graphs, jobs, monitoring information, etc. In particular, the EME 124 may store metadata associated with graph-based computations. In this context, each computer program can be considered as being implemented using a computational graph, also called a dataflow graph, or simply a graph. A graph contains one or more components (or vertices) that may be in communication (e.g., by a flow or edge) to allow data flow. In some arrangements, the graphs can execute in the parallel processing environment 126.

Implemented as a datastore, the EME 124 can track changes in development of graphs, perform statistical and dependence analysis, manage metadata pertaining to the development of graphs, and provide other similar functionality. In general, the storage of graph related metadata allows for data impact analysis, thereby providing a user with a visual sense of how the data is changing in a graph, and the impacts those changes have upon one or more other graphs. Additionally, the EME 124 may permit multiple versions of a graph to be stored, e.g., to track code changes and adjustments during development. The EME 124 also stores data objects that represent actual data to be processed by the computing system 120 including data stored in the external data store 130.

The parallel operating environment 126 accepts a specification of a data flow graph generated in the GDE 122 and generates executable instructions (e.g., computer instructions) that correspond to the processing logic and resources defined by the graph. The parallel operating environment 126 then typically executes those instructions on a plurality of processors (which need not be homogeneous).

The User Interface module 128 provides a browser-based view of the contents of the EME 124. Using the User Interface module 128, a user may browse objects, generate new objects, alter existing objects, etc. For example, the User Interface module 128 may generate browser screens for a user to search for and view objects and information about objects stored in the EME 124.

Metadata stored in the EME 124 may include data objects for graph-based applications including graph components and other functional objects for building computation graphs. One or more types of metadata may also be stored in the EME 124, for example, "technical" metadata (e.g., application-related business rules, record formats, and execution statistics) and "enterprise" or "business" metadata (e.g., user-defined documentation of job functions, roles, and responsibilities) and other similar types may be stored.

The information stored in the EME 124 in the form of data objects enables various kinds of analysis regarding applications and the data processed by those applications. For example, a user can obtain answers to questions about data lineage such as where did a given value come from, how was the output value computed, and which applications produce and depend on the data. A developer can understand the consequences of proposed modifications (e.g., If this component changes, what else will be affected? If this source format changes, which applications will be affected?). A user or developer can also obtain answers to questions involving both technical metadata and business metadata, such as which user or developer groups are responsible for producing and using a particular set of data, or what is the latest update to a specific application.

The EME 124 may also be capable of tracking the status of stored data. For example, multiple versions of one or more data objects may be tracked and stored, thereby making it possible to examine the state of objects over a time period (e.g., over a week, month, or year), and to compare it with the current state of objects. For example, the EME 124 may collect job-tracking, or execution information which enables trend analysis (e.g., How fast is our data growing?) and capacity planning (e.g., How long did that application take to run? How much data did it process, and at what rate? What resources did the application consume? When will we need to add another server?).

A user can view (and optionally, edit) information contained in and associated with the stored data objects through the User Interface module 108. In one implementation, a user can define one or more "Views," which provide information in a browser page about a relevant subset of the data objects. A "View" is defined using a syntax for selecting one or more data objects based on relationships among those objects.

As shown in FIG. 9, an EME browser interface 202 may be generated by the User interface module 128 in the EME 124. In order to display details about a specific object in the EME 124, the EME browser interface 202 may generate at least a portion of a browser page 206 (e.g., including a HyperText Markup Language (HTML) form) using information contained in the object (e.g., object A). For example, in the screenshot shown in FIG. 10, details about a Document object named "example1" are displayed. Returning to FIG. 9, a call is made as part of this browser page 206 generation to an element renderer 204 that uses information from the object (e.g., object A) and returns a page or portions of a page to be rendered. The page may include various browser form elements, including display elements that display information associated with object A and include input elements for receiving user interaction. In this particular arrangement, a button 208 is provided as an element that is capable of receiving user interactions, however, other input elements may be used to receive any of a variety of user interactions. For example, menus (e.g., drop down menus), checkboxes and other similar types of elements may be utilized. In general, the element renderer 204 refers to reusable logic implemented by one or more software programs or routines that are usually defined for a particular activity that may be performed on any objects of a particular type. As such, the element renderer 204 may determine what actions are performed on an object, and subsequently determine which input element (e.g., button 208) should be rendered on the browser page 206 (displayed in the browser interface 202). The relationship between user actions and corresponding elements (e.g., buttons) is generally provided by the logic that is specified within the element renderer 204. If an element renderer has been configured to support multiple actions or different options, the user may pass parameters to the renderer when specifying its inclusion in the "View."

In one arrangement, an element renderer (referred to as "file_upload.py") can either add a new document to the EME 124 or replace an existing document. Referring to the screenshot shown in FIG. 10, elements to the right of the text "Replace Document" have been generated by the element renderer 204. However, which action to take may be specified when configuring the element renderer 204 as part of a "View." In one example, a function call element renderer (e.g., file_upload.py) may by default add a new document to the EME 124. The function call element renderer (e.g., file_upload.py, in which "action=replace") may also replace the current document. In another example, multiple parameters may be specified for such function calls (e.g., file_update.py, in which "action=add&rule_name=my_doc_oid"). To determine that particular elements are to be displayed (e.g., the button 208) by the element renderer, logic associated with the renderer may use provided parameters (and associated with part of a "View"). The element renderer 204 and its associated programs are also typically stored in the EME 104. Since the programs are not dedicated to a single object, such programs may apply to multiple objects presented in the EME 124.

In addition to the visible portions of an HTML form that are displayed in the browser (e.g., the file "browse" control button 302 and the "submit" button 304), hidden information within the HTML form may also be used during submission of a file (or another similar operation). In general, when the button 208 is pressed (via user interactions), regardless of scenario or associated functionality (e.g., the "submit" button 304 in FIG. 10), a script 210 is invoked. The script 210 may respond to various types of user requests (e.g., HTTP-specific services) and in turn provides server-side processing in the EME 124. Browser pages (e.g., browser page 206) for objects in the EME 124 may be drawn based on a particular object or set of objects. For example, browser pages that are displayed in response to a user selecting one or more objects stored in the EME 124 may be renderings of information or various characteristics associated with the selected objects. The scripts (e.g., script 210) may be capable of generating custom renderings of pages or elements of a page whose content and/or layout depend on the objects. In some arrangements, the element renderer 204 may render one or more elements of a browser page based on a particular object, and other portions of the browser page may include one or more renderings of elements based on a different object. Various types of input may be used by the script 210, for example, information associated with an object (e.g., object A), user provided information (e.g., entered through the browser page 206) and other types of information. During execution, the script 210 may generate one or more other objects within the EME 124. For example, a second object B 212 may be produced within the EME 124, however, multiple objects may be produced. Along with producing one or more objects, the script 210 may also establish links (referred to as relations) between objects. For example, a link 214 may be established between the object B 212 and the object A. To establish such links, one or more techniques may be used, for example, commands may be called (e.g., using a command-line interface associated with EME 124). Along with being linked to the object (e.g., object A) associated with its production, the object B 212 can also be linked to other objects as determined by the script 210 associated with the rendered element or elements (e.g., button 304) for object A.

In this arrangement, EME 124 is an object oriented repository, and includes objects and associated relations. In some examples, a newly generated object may be linked to the object (or multiple objects) corresponding to the browser page being displayed. In other cases, linking to an object (e.g., an existing object) may be determined from information provided to the HTML form. In some examples, objects A and B may be linked in EME 124 (e.g., the link 214), and the link may be displayed as a link on the browser page 206 for navigation. Such techniques provide one or more advantages, for example, the knowledge of which objects to link in the EME 124 can be considered as being determined in an automated manner. Each object within the EME 124 may be stored in a "domain" which contains information about the relations that an object is associated with other objects in the EME 124. When generating one of the links (e.g., link 214) information may be added to the domain that indicates the domain to which the object is associated (e.g., points to). The script 210 may also update the target object's domain, e.g., to record an inverse relation (e.g., that another object points to it). Links such as link 214 could be shown for some or all of the documents that are stored in the EME 124 that relate to a particular object (e.g., object A or B). In some examples, the script 210 may check permissions associated with a user's input to determine whether generation of a new object is permitted, and if not the user can be notified.

In some arrangements, the user may also be directed to a new browser page or a refreshed version of the current page (e.g., page 206) to show the results of the action that has been performed (e.g., effects actions performed by the script 210). In some examples, multiple users may make modifications to the EME 124 approximately simultaneously, thereby causing the refresh to display the changes. In another example, due to the execution of the script 210, a new object (or multiple new objects) may be generated, some attributes may have been set (e.g., via direct user editing), and the new object (or objects) may have been linked to some existing objects. Based upon the refresh, a detailed view of the newly generated object may be displayed. This view may present to the user information that has been supplied by the user when editing the attributes. For example, the view of an object can take advantage of the links between objects to navigate to other objects in the EME 124 and gather additional information. Navigation may include performing a "walk" action from a starting object to another object linked to the starting object (e.g., either "upstream" or "downstream" based on a direction of the link). Multiple walk actions may be performed over successive links to navigate to one or more related objects. As a result of this walking, additional information can be presented to the user after a refresh.

The user may also be directed to a new browser page or refreshed version of the current page 206 to be prompted for additional information to be stored in the EME 124. For example, the user may be prompted to supply information associated with the newly generated object (e.g., object B) or a different object or objects related by navigating over relational links. An advantage of the automatic linking of the newly generated object is that the context of the object can help refine and enhance subsequent interaction with the user. For example, a user may provide input to generate a data object representing an employee on a browser page associated with one of multiple departments of an organization (e.g., based on a data object for the department). Upon refreshing the page, a menu (e.g., a dropdown menu) of choices can be provided for selecting a data object e.g., representing the supervisor of the added employee. If the script 210 automatically links the employee data object to the department data object, the list of choices in the menu can be limited to those existing employees whose data objects are linked to the department data object as members of that department.

The element renderer 204 may be implemented using, for example, a high level computer programming language, such as a python script or Korn shell scripts that are stored in the EME 124. The result of its execution is a fragment of the browser page 206 that is dependent on a View design and can be inserted into the rest of the content generated by the EME browser interface 202. The element renderer 204 may produce HTML for one element of the "View." In some examples, View elements are configured sequentially using a command-line interface (not shown). The browser page fragment returned by the element renderer 204 may appear to be as simple as a single button 208 in some cases, but in others the page portion may contain other form elements for data entry. The example illustrated in FIG. 10 has the file "browse" input element 302.

As mentioned above, when the user clicks to submit the file, the script 210 is typically invoked. The script 210 may be implemented as a python script or in another similar form. In some examples, the actions performed by the script 210 may be performed through the following steps. The script 210 may first generate a new object (e.g., object B 212) within the EME 124 datastore using the command line interface to the EME 124. Referring to the example illustrated in FIG. 10, associated with file uploading, the new object may be a file that the user has uploaded from their desktop computers. In other cases, the new object may initially be entirely empty, but generated as a placeholder to which other metadata or attributes can be attached. Next, the script 210 may link the new object to existing objects within the EME 124 (e.g., object A). Finally, the script 210 may direct the user to a new page or refresh the original page for the user. If the user is directed to a new page, that page is typically a web-based editor for the newly linked and generated object.

### Examples of Linking Objects

### Example 1: User Feedback

In one implementation, a button (e.g., button 208) can be displayed on a browser page (e.g., the browser page 206) for any object in the EME 124. When a user clicks the button, a script (e.g., the script 210) may be configured to execute to generate a new note object. The script may also generate a link for the original object (e.g., object A) pointing to the new note object. The new note object that is generated is presumed to be about the original object. In some examples, the new note may not be stored as part of the original object. As such, to find and display this note at a later time, a link or relation between the original and new note objects may be generated. Thereby, browser pages or reports may be designed that display all of the notes relating to the object, or some larger collection of objects. For example, this implementation may be able to provide the feedback that users have entered on objects in a project. Further, a user may be redirected to an editor to enter the text content for the new note object.

In some implementations, the feature described above can be used to generate notes for business rules, or packages of business rules. It can be used to generate notes about why a rule was approved or rejected. When the note is generated, it is automatically linked to the relevant rules or package of rules.

### Example 2: File Upload

In this example, the element render 204 is used to display a form containing a file browse control (e.g., a user selectable file on a computer system for upload to a server) and a button (e.g., the button 208) on a browser page for an EME object. In some examples, the element renderer 204 generates a browser page element that is associated with a unique identifier, and allows multiple file upload forms to be displayed on the same browser page. After the user browses to select a file (e.g., an Excel spreadsheet) relating to an object that is part of a project residing in the EME 124 (and clicks the button), the script 210 is called to load the file into the EME 124 as a new document object. Operations associated with the script 210 may generate a link from the object corresponding to the original browser page to the new document object. Subsequently, the user may be redirected to a browser page for the original object that shows a list of documents to which the object is linked for navigation and reporting purposes.

### Example 3: Horizontal Versioning of Rulesets in a Business Rule Environment (BRE)

In one implementation, business rules (e.g., in the form of a subset of metadata) may be stored in the EME 124. Various types and aspects of business rules may be implemented, for example, the rules can be similar to those described in U.S. patent 8,069,129, entitled "Editing and Compiling Business Rules," U.S. patent 8,386,408, entitled "Editing and Compiling Business Rules," U.S. patent 8,380,651, entitled "Editing and Compiling Business Rules," U.S. patent 9,002,770, entitled "Editing and Compiling Business Rules," and U.S. patent 9,589,232, entitled "Editing and Compiling Business Rules." The entire contents of the above patents (including US 8,069,129, US 8,386,408, US 8,380,651, US 9,002,770, and US 9,589,232) are herein incorporated by reference. Each business rule can be stored in a separate EME object. A business rule can be expressed as a set of criteria for converting data from one format to another, making determinations about data, or generating new data based on a set of input data. For example, in FIG. 11A, a record 402 in a flight reservation system includes values for fields that indicate the name 404 of a passenger, how many miles 406 the passenger has flown this year, the class 408 of the passenger's ticket, and the row 410 in which the passenger is seated. A business rule may indicate that such a passenger should be assigned to a particular boarding group (e.g., boarding group 1). While a business rule may be generally understandable to a user, e.g., "first class passengers are in group 1," such information may need to be translated into one or more other forms to be recognized and processed by a computing device (e.g., a computer system).

In one particular arrangement, to implement business rules in a graph-based computation environment, a transform 412 may be generated that receives input records, such as record 402, from one or more data sources (e.g., input dataset 400). The term "transform" refers to a mechanism, such as a software module or a data processing entity, that transforms input data to output data, in which the transformation of data may include, e.g., filtering, sorting, cleansing, integration, and extraction of data. A transformation of data can be any type of data manipulation by a data processing entity. The transform may insert this information into an output record, e.g., a record 414, which indicates the passenger's name 404 and which group the passenger has been assigned (e.g., a group 418). The record 414 may be correspondingly inserted into an output dataset 420. In this example, the datasets (e.g., dataset 420) are illustrated showing an exemplary record, but in general the datasets may include any number and types of records. In some arrangements, input and output datasets may also be referred to as data streams, for example, as the data (from the datasets) may flow into or out of a graph.

The transforms may be incorporated into graph-based computations having data processing components and that may be connected by linking elements representing data flows. For example, a computation graph 430 illustrated in FIG. 11B includes two data sets 432, 434 (for example, frequent flier data and flight reservation data) that provide input for one or more computations. Format components 436, 438 format the input data, for example, using similar or different types of adjustments to produce commonly formatted data sets that be combined (e.g., by a join component 440) to produce an output data set 442 (that may be used with additional processing operations). A transform may itself be a graph-based computation, such as that in the graph 430, or may be implemented within a component of a graph, such as the individual components 436, 438, and 440 of which the graph 430 is composed.

In some arrangements, one or more techniques may be used to simplify generation of transforms (e.g., for non-technical users). For example, a tool may be provided for users to input a set of business rules (referred to as a ruleset) in a familiar format that provides a computer system with the one or more transforms to be executed. For example, a ruleset may be considered a set of rules that produce a single transform. A rule may be composed of one or more rule cases that compute different values for the rule's output depending on the input. A rule may also include multiple rules, which may produce values for additional or alternative outputs. A rule set may also contain other rulesets, which may be referred to as "included" rulesets.

For example, a ruleset may receive as input records of transactions, e.g., credit card transactions, and generate as output alert messages, e.g., messages indicating fraudulent transactions or messages alerting users of over balance. A ruleset may involve one or more mathematical formulas in which one or more fields of the input records are parameters of the formulas.

For a project in the EME 124, a browser page may list some or all of the rulesets contained in the project. The browser page in this case may display details that are related to a particular object, e.g., a particular project. Projects in EME 124 usually contain various kinds of technical metadata. In this example, the browser page may list all the rulesets that are contained in the project. For each ruleset in the list, a number of buttons or other types of elements may be displayed, for example, through use of the same element renderer 204.

Referring to FIG. 12, a series of rows are included in an exemplary list, and each row in the list includes four buttons (e.g., buttons 502, 504, 506 and 508). Each of the displayed buttons are provided by calling an element renderer (e.g., the element renderer 204) with different options. More specifically, buttons 502, 504, 506, 508 respectively represent different actions that can be performed based upon the ruleset: "Promote Ruleset", "Demote Ruleset", "New Minor Version", and "New Major Version". Promoting a ruleset broadly may be associated with transitioning a particular ruleset from a development phase to a testing phase, and finally to a production phase (e.g., where the ruleset may be executed by a user for data processing). These four actions may be used to promote or demote the rule during the development lifecycle and to possibly generate different versions of the rule (e.g., a new major version, a minor version, etc.). Such a capability allows for previous versions of a ruleset (which may be relatively old) to be accessed (and used) while allowing the ruleset to evolve over a period of time. For example, rather than changing an existing rule or ruleset, a new copy of the rule or ruleset may be generated, adjusted and assigned a new version number.

In some arrangements, an element renderer (e.g., element renderer 204) may be configured to determine whether a particular button should be displayed based upon one or more permissions associated with a ruleset. For example, a permission may be associated with modifying the ruleset and its current development lifecycle. Referring to the development lifecycles as an example, different phases in that lifecycle may be development ("Dev"), testing ("Test") and production ("Prod"). So the logic of the element renderer (e.g., element renderer 204) may sequentially step through these three phases (in that particular order). Once the "Prod" phase is reached, the ruleset may not be further promoted. Similarly, in the "Dev" phase the user may not further demote the rule. The element renderer 204 may also pre-calculate confirmation text that can be displayed if the user clicks the button. That is, when the user clicks on one of the buttons, a popup graphic that includes text may be displayed and confirm the action. For example, clicking on the button 502 in the first row may popup a dialog box with text indicative of "Are you sure that you want to Promote Ruleset-1-Dev to Test?" By providing such a display, the user may confirm the action so the probability of accidental changes (from accidental clicks) is reduced.

In addition, when a user clicks one of the buttons, the script 210 is called and makes a copy of the corresponding ruleset. Already populated with content, the ruleset is copied and can be used as a starting point for subsequent changes. Alternatively, the copy may serve as a backup, such that changes may be made to the original. The name for the new copy of the ruleset may be determined based on the original name of the rule and the action. Different names may also be used so that the user can distinguish them later. For example, if the rule name originally ends in "Dev" and it is being promoted, the new rule name might end in "Test". As mentioned, different activities are being performed on the rule at different stages. When in the "Dev" stage, it can be considered as being modified by a developer. When in the "Test" stage, the rule or ruleset is generally being checked for appropriate behavior and is typically remains unchanged. In the "Prod" stage, the ruleset is being used, for example, for its intended purpose and typically is not changed. Different stages and versions may be necessary because as soon as a ruleset is promoted from "Dev" to "Test", a developer may start making new changes. Based on the new name, the script 210 may need to update some information that is stored within the ruleset. In some examples, rulesets contain information about the name of the code file (e.g., the transform 412 for a graph in FIG. 11A). In some examples, this code file is named after the ruleset. As such, if a ruleset is generated with a new name, the name for the file generated is also updated. Subsequently, the user may be redirected to the list of rulesets in the project which has been updated to contain the new rule (and be allowed to view the result of the performed action). For example, if any of these actions are performed on a ruleset, the user is taken to a browser page for the new or modified rule.

### Example 4: A Wizard for Object Creation.

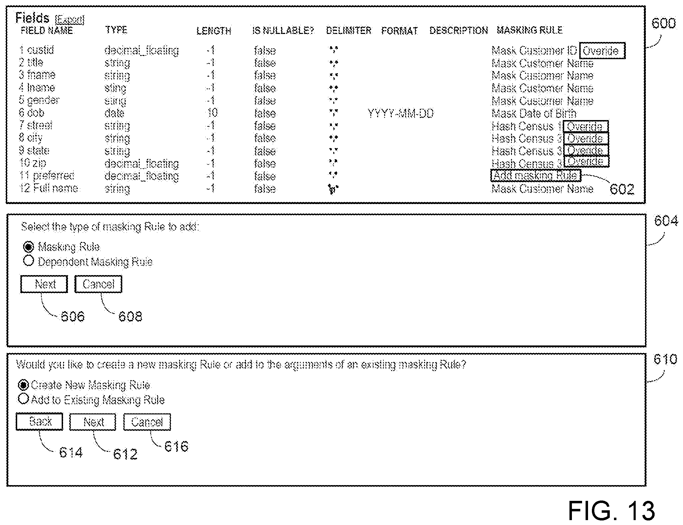

Referring to FIG. 13, additional operations may be implemented for producing one or more objects, for example, based upon user interaction. In one arrangement, information may be gathered from a user, over a series of steps, for producing one or more objects. For example, user interaction (e.g., a user clicking on a graphical representation of a button) may initiate the execution of a wizard (e.g., series of dialogs) or another type of UI screen sequence that guide a user through a series of steps. While stepping through the sequence, information is collected e.g., from the user that is used for producing one or more objects. The collected information may also be used for other operations, for example, the collected information may represent properties associated with one or more objects and may be used for modifying the object or objects.

As shown in the figure, a portion of a screen 600, for illustrative purposes, includes fields (e.g., columns) in a dataset (e.g., a table). In this example, a data masking rule (e.g., obfuscation, de-identification, etc.) is defined and may operate upon data associated with the fields. To initiate the process, a graphical representation of a button 602 (labeled "Add Masking Rule") is selected by a user (through interactions with a pointing device such as a mouse). Upon being selected, a wizard is executed that includes a series of screens. For example, a portion of a first wizard screen 604 may be presented first for collecting user provided information. In this particular example, the wizard screen 604 presents two radio buttons and prompts the user to select the type of masking rule to be produced. Once the selection is made, the user may select a button 606 (labeled "Next") to transition to the next wizard screen. To terminate the wizard, another button 608 (labeled "Cancel") may be selected by the user. Next, in this scenario, another wizard screen is presented (as provided by a portion of a screen 610). For this particular screen 610, two radio buttons are presented for the user for selecting whether to create a new rule or to add to an existing rule. Based upon the selections provided by the user, the wizard may determine which particular path (e.g., series of screens) is followed. As such, the wizard may include multiple branched paths (e.g., tree structures) for various user directed scenarios. Similar to the screen 604, the user may select to proceed forward with the wizard by selecting a button 612 (labeled "Next"), move back one screen by selecting a button 614 (labeled "Back") or halt the wizard by selecting a button 616 (labeled "Cancel"). Upon making the selection, the wizard executes appropriate actions.

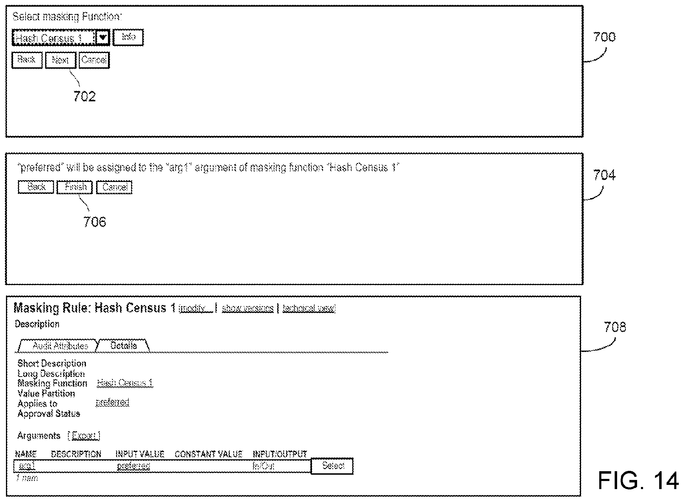

Referring to FIG. 14, another portion of a screen 700, which is provided by the wizard, prompts the user to select from a list of objects to define the masking rule. For the selection, in this example, a list of functions is provided in a menu (e.g., a drop down menu). Each of the selected functions may be associated with one or more objects that may be stored (e.g., in the repository 124). In this example, one or more masking functions (e.g., Hash Census 1) are associated with the stored objects. Along with using the menu for mask selection, the user can use buttons (similar to the buttons 612, 614 and 616) to control the direction traveled through the wizard. In this example, a button 702 (labeled "Next") is selected to move forward to a screen 704 that provides a summary of the user selections. For this example, the field named "preferred" (as illustrated in screen 600) is associated the function "Hash Census 1". Upon reviewing this information and selecting a button 706 (labeled "Finish"), a new object (or multiple objects) is produced and one or more graphical representations may be produced, e.g., to navigate to the object (or objects). For example, briefly returning to the screen 600 of FIG. 14, a link to the newly produced object may replace the graphical button 602 and upon being selected, the link may direct the user to the new object. In one arrangement, a screen 708 may be presented to the user to view information and parameters associated with the produced object. While this wizard example demonstrated the production of an object (or multiple objects), other operations may be provided by similar wizards. For example, object adjustments (e.g., function assignments, etc.), object deletions and other similar operations may be executed.

### Example 5: Edit Renderer

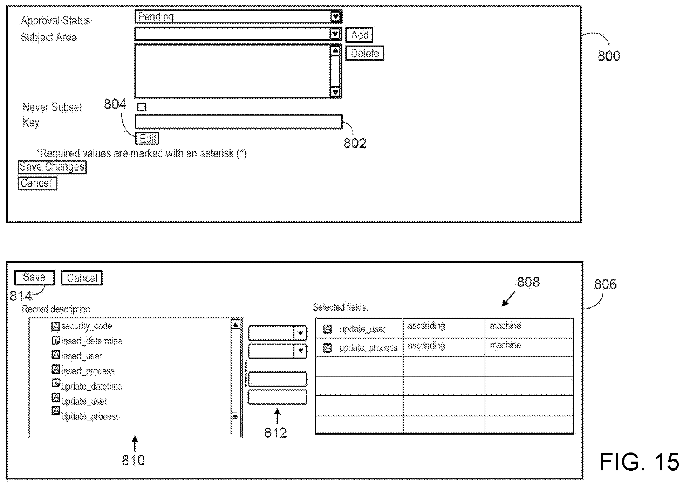

Referring to FIG. 15, upon one or more objects being created, other operations such as operations associated with exchanging data may be executed. In one arrangement, the functionality of an element rendered may be expanded to include editing capabilities. For example, a script, program or other type of instruction collection may be executed to produce an object that may be associated with another program (e.g., a dedicated editor). Introducing an editor that is associated with an object allows editing capabilities to be expanded (e.g., editing metadata with constraints, launching external edit controls, etc.). Along with enhancing editing capabilities, the editor associated with the object may increase editing flexibility.

As illustrated in the figure, a screen 800 includes a portion of an edit screen. A field 802 included in the screen (labeled "Key") has a control that is an edit renderer. In this example, a value (e.g., a numerical value, text, function, etc.) cannot be directly entered or edited. Rather, a graphical button 804 may be selected by a user to launch an editor that is associated with the object of the Key field. In this arrangement, a screen 806 presents an exemplary editor 808 that is associated with the Key field and allows user selected information to be associated with the field. In this particular arrangement, the editor 808 is implemented with a software development product, which produces rich internet applications (e.g., user interfaces) for multiple platforms, such as Flex (from Adobe Systems of San Jose, California). In this particular example, the editor 808 provides the user with a set of selectable records 810 and selection tools 812 for identifying data for the Key field 802. Once selected, a graphical button 814 may be selected to return (and provide the selected data) to the previous screen 800.

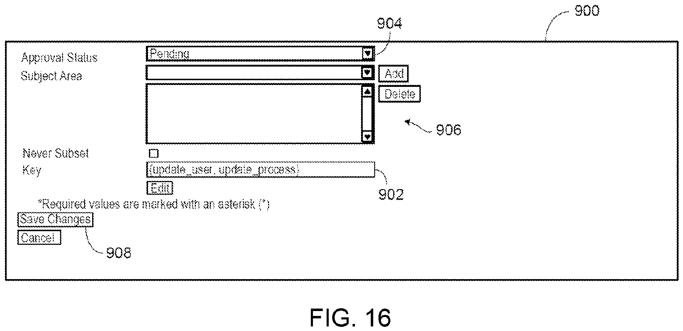

Referring to FIG. 16, a screen 900 represents an updated version of the screen 800 with the Key field populated with the information from the editor 808 (shown in screen 806). In particular, an updated Key field 902 includes the two selected fields from the editor 808. As such, two sets of data are associated with screen 900, however, in some example additional sets of data may be present. One of the data sets may be provided from objects associated with the screen 900, for example, data selected with a pull down menu 904 and entered into a dialog 906 rendered in the screen 900. The second set of data is provided by the editor 808 included in the screen 806 (and associated with the Key field 802). This data may be passed, for example, to another screen by using one or more techniques. For example, the data sets may be placed into a similar form. In one arrangement, the data may be bundled together in a predetermined form or format to be submitted in a query string (e.g., a HTTP query string). For example, the user may select a graphical button 908 (labeled "Save Changes") that initiates the bundling of the data into a query string. Upon being bundled into the query string, the string may be provided to one or more screens, objects, or other locations for additional processing and presentation. Various types of editors may also be implemented, for example, editors associated with time and date, graphical editors (e.g., for viewing various aspects of three dimensional objects) and other types of editors may be used.

### Operations of Element Renderer

Referring to FIG. 17, a flowchart 1000 represents some operations implemented by an element renderer (e.g., element renderer 204) and a script (e.g., the script 210) for managing data objects stored in a data repository (i.e., the EME 124) and displaying elements associated with data objects on a graphical user interface (i.e., the user interface module 108).

As mentioned, richly interconnected metadata objects in the EME 124 may be referenced by relational links. In addition to enforcing and maintaining the logic relationships among multiple data objects, the EME 124 also uses a web-browser-based graphical user interface (e.g., interface 202) to display details of a specific data object. In particular, the information within an object is automatically used to generate 1002 a form (e.g., a web form) that may invoke corresponding operations on one or more data objects. This is typically implemented by the element renderer, which is applicable to almost all data objects that reside in EME 124. Upon receiving 604 user input represented by various user interface interactions regarding the data object, the script 210 may translate user input data in the web form to generate 1006 a new data object within the data repository. Rather than merely copying the input data or representing a temporary variable obtain during intermediate computation, this new data object includes contents that may persist in the EME 124. Subsequently, linking 1008 the new data object with one or more related data objects in the EME 124 may be automatically implemented based on the location where the user operation is invoked. As a result of above mentioned objects generation and linking, the browser interface 202 manages contents for display on the graphical user interface and enables the user to see changes in the EME 124 through the interface.

### Business Tagging

In some implementations, rulesets can be managed by using tags, which are data objects that contain information about the corresponding rulesets. The tags used to manage rulesets can be, e.g., extensible markup language (XML) tags, but can also be other types of data objects. The following describes the use of tags to manage business rules, but the same principle can also be applied to using tags to manage other types of rules.

A rule specification or a ruleset may go through several stages of a development lifecycle or approval process. For example, referring to the development lifecycles as an example, different phases or stages in that lifecycle may be development, testing, and production. For example, referring to the approval process as an example, different phases or stages in that process may be open, submitted (or review), and approved (or released). Each stage of the development lifecycle or approval process are also referred to as a "state."

As shown in FIG. 12, a user interface may provide buttons that represent different actions that can be performed based upon the ruleset, such as promoting or demoting a ruleset or generating a new major or minor version of the ruleset. Whether a particular button should be displayed can be determined based upon one or more permissions associated with the ruleset. In some implementations, the permissible transitions may be specified by a transition specification, referred to here as a "tagging specification."

Referring to FIG. 18, as an example, a tagging specification 1150 specifies permissible transitions for states "Development," "Testing," and "Production" associated with a ruleset. The permissible transitions include a transition from "Development" to "Testing," a transition from "Testing" to "Production," a transition from "Testing" to "Development," and a transition from "Production" to "Testing." We use tags to record the state associated with the ruleset. For example, when we say that the ruleset transitions from the "Development" state to the "Testing" state, the ruleset itself does not change, rather, the tag associated with (or pointing to) the ruleset changes from the "Development" state to the "Testing" state. The tagging specification 1150 includes code 1152 that specifies, when the tag associated with the ruleset is in the "Development" state, a button with a label "Promote" is to be shown in a user interface. Upon user interaction with the "Promote" button, the tag associated with the ruleset is to transition to the "Testing" state. The tagging specification 1150 includes code 1154 that specifies, when the tag associated with the ruleset is in the "Testing" state, a first button with a label "Promote" and a second button with a label "Demote" are to be shown in the user interface. Upon user interaction with the "Promote" button, the tag associated with the ruleset is to transition to the "Production" state, and upon user interaction with the "Demote" button, the tag associated with the ruleset is to transition to the "Development" state. The tagging specification 1150 includes code 1156 that specifies, when the ruleset is associated with the "Production" state, no further modification is permitted.

As the tag associated with the ruleset transitions among the various possible states, the tag associated with the ruleset contains information that keeps track of the state associated with the ruleset. Thus, when a ruleset is promoted or demoted to be associated with a different state, the content of the tag is updated to reflect the current state associated with the ruleset.

In some implementations, two or more types of tags can be used to manage rulesets. For example, one type of business tags can be "object tags" that are used for application configurations and rulesets generated by business users. Business users can generate object tags when they publish application configurations or rulesets. One type of business tags can be "technical tags" that are used for generic graphs, application templates, record format files, and packages that are generated by developers. A technical tag can be used to identify the versions of the generic graphs, application templates, and other objects to be used for a release. One type of business tags can be "release tags" that are used to identify the technical tags and the object tags that define the contents of a release of a ruleset or an application that uses one or more rulesets.

The following describes the use of release tags for managing various versions or releases of a ruleset. For example, referring to FIG. 19A, a user interface 1100 displays the names of three release tags that point to three versions or releases of a business ruleset: "CEP_release_V1.0" 1102, "CEP_release_V1.1" 1104, and "CEP_release_V1.2" 1106. Each release tag (which points to a particular version of the business ruleset) has an associated state 1108, such as "Approved," "Open," or "Submitted." In this example, the release tags "CEP_release_V1.0," "CEP_release_V1.1," and "CEP_release_V1.2" are associated with the states "Approved," "Open," and "Open," respectively. When a user selects one of the release tags, a button that allows the user to modify the state of the release tag is displayed in the user interface 1100. For example, when the user selects the release tag "CEP_release_V1.2," which has a state of "Open" 1110, a button "Submit" 1112 is shown.

In this example, each version or release of the ruleset is associated with a release tag that includes information on the state associated with the ruleset. The tagging specification defines the various states (or stages) of a review process. The tag object contains a link to a specific version of a ruleset and, optionally, the review history. For example, the review history may indicate that on Monday, a particular developer generated a tag for a ruleset; on Tuesday, a manager rejected the tag; and on Wednesday, the developer resubmitted the tag. As each ruleset transitions among the various states, the tag associated with the ruleset is updated to keep track of the state associated with the ruleset. Thus, when a ruleset is promoted or demoted to be associated with a different state, the content of the tag pointing to the ruleset is updated to reflect the current state and, optionally, review history.

Referring to FIG. 19B, when the user clicks on the button "Submit" 1112 (shown in FIG. 19A), the user interface 1110 updates the state of the tag "CEP_release_V1.2" to "Submitted" 1114, and displays buttons "Approve" 1116 and "Reject" 1118. If the user clicks on the button "Approve" 1116, the tag "CEP_release_V1.2" transitions to "Approved" state, whereas if the user clicks on the button "Reject" 1118, the tag transitions to "Open" state.

Referring to FIG. 19C, for the example shown in FIGS. 19A and 19B, the permissible transitions among the states include a transition from "Open" 1200 to "Submitted" 1202, a transition from "Submitted" 1202 to "Open" 1200, and a transition from "Submitted" 1202 to "Approved" 1204. Which button(s) (e.g., "Submit" 1112, "Approve" 1116, and/or "Reject" 1118) is/are displayed depends on the current state associated with the ruleset and the permissible transitions specified by the tagging specification.

For example, referring to FIG. 20, a tagging specification 1120 specifies the permissible transitions of the tags among the states, such as those shown in FIGS. 19A and 19B. The tagging specification 1120 includes code 1122 that specifies, when the tag is in the state "Open" 1124, a button with the label "Submit" 1126 is to be displayed in the user interface. Upon user interaction with the button "Submit" 1126, the tag is to transition to a target state "Submitted" 1128. The tagging specification 1120 includes code 1130 that specifies, when the tag is in the state "Submitted" 1132, a first button with the label "Approve" 1134 and a second button with the label "Reject" 1136 are to be displayed in the user interface. Upon user interaction with the "Approve" button, the tag is to transition to a target state "Approved" 1138, and upon user interaction with the "Reject" button, the tag is to transition to a target state "Open" 1140. The tagging specification 1120 includes code 1142 that specifies, for the state "Approved" 1144, no button is displayed, indicating that no further transition is performed once the tag is in the "Approved" state, indicating that the ruleset associated with the tag has been finalized and approved.

In some implementations, the tagging specification optionally includes scripts that are invoked either before or after an action (e.g., an action to approve a tag so that the ruleset becomes associated with the approved state). For example, a "pre-state transition script" refers to a script that is invoked before the action, in which the script may include conditions that can cancel the action. For example, a pre-state transition script can cause an attempt to approve a tag to fail if there are validation errors.

In some implementations, a company that manages the development, testing, and release of rulesets may require that, as the rulesets transition through various stages in the development lifecycle or approval process, the rulesets need to be handled by particular authorized staff member(s) at each stage. In this example, each stage may correspond to certain role(s) of employee(s) in the company. The tagging specification that defines the states may also specify the staff member(s) who is/are authorized to enable the transitions. In the example shown in FIG. 18, the tagging specification 1150 includes code 1158a, 1158b, and 1158c that specifies which staff member(s) is/are authorized to enable various transitions among stages. For example, code 1158a specifies that the staff member(s) who is/are authorized to enable the transition from "Development" to "Testing" are listed in "rolename-list1". Code 1158b specifies that the staff member(s) who is/are authorized to enable the transition from "Testing" to "Production" are listed in "rolename-list2". Code 1158c specifies that the staff member(s) who is/are authorized to enable the transition from "Testing" to "Development" are listed in "rolename-list3".

For example, referring to FIG. 21, a ruleset approval process 1160 includes a development phase 1162, a review phase 1164, and a released phase 1166. In the development phase 1162, the ruleset is associated with a first state 1168. In the review phase 1164, the ruleset can be associated with one of two states: a second state 1170 and a third state 1172. In the released phase 1166, the ruleset is associated with a last state 1174. For example, the first state can be an "Open" state, the second state can be a "Review-1" state, the third state can be a "Review-2" state, and the last state can be a "Released" state. A tag associated with the ruleset keeps track of the state associated with the ruleset. The tag transitions through various states, representing the ruleset going through the various stages in the approval process.

When the tag associated with the ruleset is in the first state 1168, developers 1176 can generate and modify the ruleset, and promote (or submit) the ruleset so that the tag transitions 1178 to the second state 1170. When the tag is in the second state 1170, the ruleset is reviewed by a manager 1180, and the developers 1176 cannot modify the ruleset or change the state of the tag. The tag associated with the ruleset may contain information about the review history for the ruleset. The manager 1180 can either promote (or approve) the ruleset so that the tag transitions 1182 to the third state 1172, or demote (or reject) the ruleset so that the tag transitions 1184 back to the first state 1168. When the tag transitions 1184 back to the first state 1168, the developers 1176 can further modify the ruleset and then promote the ruleset for further review.

When the tag associated with the ruleset is in the third state 1172, the ruleset is reviewed by a senior manager 1186, and the developers 1176 and the manager 1180 cannot modify the ruleset or change the state of the tag. The senior manager 1186 can either promote (or approve) the ruleset so that the tag transitions 1188 to the last state 1174, or demote (or reject) the ruleset so that the tag transitions 1190 back to the first state 1168. When the tag transitions 1190 back to the first state 1168, the developers 1176 can modify the ruleset and promote the ruleset for further review. When the tag is in the last state 1174, the state of the tag can no longer be modified. For example, when the senior manager 1186 promotes the ruleset and the tag transitions to the last state 1174, it may indicate that the ruleset is ready to be released to a customer and no further modification to the ruleset is allowed.

In some implementations, two or more business rulesets can be packaged together in a "container," "collection," or "release" and be managed as a group. The container can be associated with one of several states, and each of the business rulesets in the container can also be associated with a state that can be either related to, or independent of, the state of the container. The container can be associated with a tag that has information about the state associated with the container.

For example, a software product may undergo several releases or versions, in which each release of the software product may include a plurality of business rulesets. Different releases may be associated with different combinations of business rulesets. A "release tag" or "group tag" may be used to store information about a group of rulesets related to a release of the software product. Different releases of the software product may be associated with different release tags.

For example, referring to FIG. 22, a user interface 1190 shows a release tag "CEP_release_V1.1" 1192 associated with a group of rulesets, in which the release tag "CEP_release_V1.1" 1192 includes information about a group of object tags 1194, such as "Investigate_Customer_Activity_V1.1," "Transaction_Classification_V1.1," "Review_Phone_Activity_ V1.1," "Review_Posted_Monetary_Activity_V1.1," "Review_Web_Activity _V1.0," and "Review_Non_Monetary_Activity_V1.0." Each of the object tags 1194 points to a corresponding ruleset. The release tag "CEP_release_V1.1" 1192 is associated with a state "Open" 1196. The release tag "CEP_release_V1.1" 1192 includes information about the current state associated with the group of rulesets. The object tags 1194 associated with the rulesets, such as "Investigate_Customer_Activity_V1.1," "Transaction_Classification_V1.1," "Review_Phone_activity_V1.1," "Review_Posted_Monetary_Activity_V1.1," "Review_Web_Activity _V1.0," and "Review_Non_Monetary_Activity_V1.0" are associated with the states 1198 "Submitted," "Submitted," "Submitted," "Submitted," "Approved," and "Approved," respectively. Each of the object tags "Investigate_Customer_Activity_V1.1," "Transaction_Classification_V1.1," "Review_Phone_activity_V1.1," "Review_Posted_Monetary_Activity_V1.1," "Review_Web_Activity _V1.0," and "Review_Non_Monetary_Activity_V1.0" keeps track of the current state associated with the corresponding ruleset.

In this example, the state associated with the group release tag "CEP_release_V1.1" 1192 is different from the states 1198 associated with the rulesets in the group. In some implementations, the states associated with the individual rulesets in a group are independent of the state associated with the group. Thus, when the release tag transitions among various states, the states associated with the individual rulesets does not change (unless the user specifically modifies the states of the object tags associated with the rulesets). For example, when the group release tag "CEP_release_V1.1"1192 transitions from "Open" state to "Submitted" state, from "Submitted" state to "Approved" state, or from "Submitted" state to "Open" state, the states associated with the rulesets 1194 remain the same. Similarly, when one or more object tags associated with one or more of the rulesets 1194 change states, the state of the group release tag 1192 does not change (unless the user specifically modifies the state of the group release tag 1192).

In some implementations, the states associated with the rulesets in a group are influenced by the state associated with the group. For example, a tagging specification can specify that the group can be associated with one of N states (N being a positive integer greater than or equal to 2), and each ruleset in the group can be associated with one of the N states. The tagging specification can further specify that, when the group release tag is promoted from the (i-1)-th state to the i-th state, the object tags (associated with the rulesets) that have states later than the i-th state are demoted to the i-th state, whereas the object tags that have states earlier than the i-th state remain unchanged.

For example, the tagging specification can specify that when the group release tag is promoted from the (i-1)-th state to the i-th state, the object tags (associated with the rulesets) that have states earlier than the i-th state are also promoted to the i-th state, whereas the object tags that have states later than the i-th state remain unchanged.

For example, the tagging specification can specify that when the group release tag is demoted from the (i+1)-th state to the i-th state, the object tags (associated with the rulesets) that have states later than the i-th state are also demoted to the i-th state, whereas the object tags that have states earlier than the i-th state remain unchanged.

For example, the tagging specification can specify that when the group release tag is demoted from the (i+1)-th state to the i-th state, the object tags (associated with the rulesets) that have states earlier than the i-th state are also promoted to the i-th state, whereas the object tags that have states later than the i-th state remain unchanged.

The states that are allowed to be associated with the group release tag 1192 can be different from the states that are allowed to be associated with the object tags 1194 (associated with the rulesets). For example, the tagging specification may specify that the group release tag 1192 can be associated with one of "Open," "Review-1," "Review-2," or "Released" states, whereas each object tag 1194 can be associated with one of "Open," "Submitted," or "Approved" states.

The tags, which are data objects, can include various types of information associated with the development or approval of the ruleset. The tags can provide the function of the common log data objects 116 in FIG. 1. The various types of information can include, e.g., what actions (e.g., promote, demote, submit, approve, or reject) were performed on the ruleset, who performed the actions, and when the actions were performed. The tags can also include comments or notes by the people who developed, tested, reviewed, and/or approved the rulesets. This way, at each stage of the development lifecycle or approval process of the ruleset, the person working on the ruleset can have useful information about the work that has previously been done on the ruleset, enabling the person to quickly focus on issues that need to be addressed. When something goes wrong, the user can look at the review history and attempt to identify what went wrong, where the mistake occurred, and take corrective action so as to avoid that type of problem in the future.

FIGS. 23A and 23B show screenshots 1210 and 1220 of examples of activity logs associated with business tags in which the logs include information about the operations that were performed, the users who performed the operations, comments by the users, and the dates and times that the operations were performed.

### Integrated Application Development System

The following describes the integrated application development system 100 in more detail. Referring back to FIG. 1, the application development system 100 includes the document editor 102, the business process management tool 104, the source code control tool 106, the application simulator 108, the repository of data 110, and the integrated user interface 112. The document editor 102 allows a user to view and edit business rules, and may provide functions including but not limited to those shown in FIGS. 12-16, 19A, 19B, 22, 23A, and 23B.

The user may use the document editor 102 to modify entries in a spreadsheet having rows that correspond to the rule cases. The document editor 102 can be used to edit the triggering criteria for the rules. The document editor 102 is linked to the business process management tool 104, which manages the states of the rules. For example, the document editor 102 in combination with the integrated user interface 112 enable users to promote or demote a rule during the development lifecycle of the rule, and to approve the rule for release. In response to the user promoting, demoting, or approving a rule, the business process management tool 104 keeps track of the states of the rule using tags described above. Based on the rule specification associated with a rule, the business process management tool 104 determines which transitions of states are allowed, and communicates with the document editor 102 so that the editor 102 can control the integrated user interface to display appropriate items (e.g., "Submit," "Approve," "Reject," "Promote," and/or "Demote" buttons) in the user interface to enable the user to change the state of the rule.

The user may develop several rules, and each rule may have several versions. For example, different versions of a rule may have different triggering criteria. FIG. 24 shows an exemplary user interface provided by the document editor 102 showing several rules that a user is developing. In this example, the user is working on rules such as "Cash_Back_Notifications," "Review_Non_Monetary_Actions," "Review_Phone_Activity," "Review_Posted_Monetary_Activity," "Review_Web_Activity," and "Transaction_Classification" rules. The user selected "Review_Posted_Monetary_Activity" rule 1242, and the document editor 102 shows information 1244 about various versions of the rule 1242. In this example, versions 1.0 and 1.2 of the rule have been approved, versions 1.1 and 1.3 of the rule have been submitted, and version 1.4 of the rule is open. Version 1.0 of the rule is used in CEP (the name of the workspace) release version 1.0, version 1.1 of the rule is used in CEP release version 1.1, and version 1.3 of the rule is used in CEP release version 1.2.

The document editor 102 is linked to the source code control tool 106 so that when a version of the rule is approved for release, that version of the rule is stored by the source code control tool 106, which maintains a master repository of various versions of the rules. Subsequently, when a user intends to edit a particular version of the rule, the user can request permission to change the rule, and the source code control tool 106 will allow the user to check out the rule and edit the rule, and prevent others from editing the rule until the rule is checked back in. The source code control tool 106 also keeps a record of the user who made changes to the rule, and what changes were made to the rule.

Referring to FIG. 25, in some implementations, the document editor 102 can generate a ruleset difference report 1250 that compares different versions of a rule and provide information on the differences between the versions. In this example, the user compares versions 61 and 128 of the "Review_Posted_Monetary_Activity" rule, and the document editor 102 provides a list of differences 1252 between the versions.

A feature of the business tagging approach is that the user may pick and choose among different versions of various rules to assemble a ruleset container or package for use with an application, and simulate the execution of the application using the assembled ruleset container. For example, a developer of a credit card company may use the application development system 100 to develop rules for a credit card processing application. The application may use a "credit card approval" rule for deciding whether to approve credit card applications, a "credit card rewards" rule for deciding what rewards to give to credit card customers, and a "fraud detection" rule to evaluate the possibilities that certain credit card transactions are fraudulent. For example, the developer may have developed versions 1.0, 1.1, 1.2, and 1.3 for the "credit card approval" rule, versions 1.0, 1.1, 1.2, 1.3, 1.4, 2.0, and 2.1 for the "credit card rewards" rule, and versions 1.0, 1.1, 2.0, 2.1, 3.0 and 3.1 for the "fraud detection" rule.

For example, the developer may decide to simulate the execution of the credit card processing application using version 1.1 of the "credit card approval" rule, version 2.1 of the "credit card rewards" rule, and version 3.0 of the "fraud detection" rule. The document editor 102 may provide an interface to allow the user to select particular rules, and a particular version of each of the selected rules to be packaged together in a container, and associate the container of rules with the credit card processing application.

Referring back to FIG. 1, the document editor 102 is linked to the application simulator 108. Using the example above, after the user associates the container of rules with the credit card processing application, the document editor 102 provides an option for the user to invoke the application simulator 108 to simulate execution of the credit card processing application. In some implementations, the application is a graph-based computation having data processing components connected by linking elements representing data flows. The application simulator 108 converts the rules in the container into a transform, associates the transform with a component in the graph-based computation, executes the graph-based computation, and displays the output results of the execution.

The user may examine the outputs of the simulation to determine whether further modifications of the rules are needed. For example, if the user determines that the application failed to detect many fraudulent transactions in the test data set, the user may use the document editor 102 to change the state of and/or edit version 3.0 of the "fraud detection" rule currently associated with the application. Suppose version 3.0 of the "fraud detection" rule is currently in the "Testing" state. The user may demote version 3.0 of the rule to the "Development" state, indicating that the rule needs further revisions. The user may select version 2.1 of the "fraud detection" rule to be included in the container of rules associated with the credit card processing application, and run the simulation again. If the user is satisfied that version 1.1 of the "credit card approval" rule, version 2.1 of the "credit card rewards" rule, and version 2.1 of the "fraud detection" rule function properly together, the user may approve the container for release, for example, as release version 1.0.

After the user finishes editing version 3.0 of the "fraud detection" rule, the user may promote the state of the rule to "Testing," include this version of the rule in the container, and run the simulation of the application. If the user determines that version 1.1 of the "credit card approval" rule, version 2.1 of the "credit card rewards" rule, and version 3.0 of the "fraud detection" rule function properly together, the user may approve the container for release, for example, as release version 1.1.

An advantage of the application development system 100 is that it provides an integrated user interface that allows the user to edit rules, manage development lifecycles and versioning of the rules, and perform simulations of applications using the rules in a unified manner. Tags and other information associated with the rules are accessible to the various tools in the system 100. For example, when the user uses the document editor 102 to select particular rules and particular versions of the rules for a container, the information about the selected rules can be provided to the application simulator 108, which loads the selected versions of the rules and generate transforms based on those rules.

For example, the simulation output dataset generated by the application simulator 108 can be provided to the document editor 102, which can display the rules alongside the output dataset. The document editor 102 may provide an interface that allows the user to select one or more values in the output dataset, and the interface may highlight the portions of the rules that were triggered to generate the selected output value(s). If the output value(s) are different from intended, the user can review the highlighted portions of the rules to determine if they need further revisions. The user can modify the rules, run the simulation again, and see if the updated output values are the same as intended, and further revise the rules as necessary.

The application development system 100 allows a business person who may not have special expertise in computer programming to be able to edit rules, execute application programs using the rules, determine if the outputs are the same as intended, and further edit the rules as necessary. For example, a financial analyst working at a credit card company may have expertise in finance but may not know how to write computer code to implement rules for processing credit card applications, rules for determines credit card rewards, and rules for detecting fraudulent credit card transactions. Using the application development system 100, the financial analyst can revise values and formulas in a spreadsheet (which many financial analysts are familiar with), and the rules specified based on those values and formulas can be transformed into code that are inserted into an application program by the application simulator 108 for execution.

In some implementations, the application development system 100 facilitates processes for developing business rules used in marketing or business campaigns, such as the processes 1260, 1350, 1360, and 1370 in FIGS. 26-29 below. The processes 1260, 1350, 1360, and 1370 are examples only. Different companies may have different processes and different numbers of team members who work together to develop business rules. For example, one company may use a single maker and a single checker to write and review the business rules and evaluate the risks. For example, another company may have three or more checkers to provide additional levels of review.

In some implementations, the application development system 100 enables users to conveniently develop business rules for facilitating various applications. For example, a financial institution (e.g., a bank, credit card company, or investment firm) may have a campaign that offers new products or promotions to customers or potential customers. In a first product offering, the financial institution may offer a new home equity loan to qualified customers. In a second product offering, the financial institution may offer new credit cards having various rewards programs. The offers of these campaign products may appear in advertisements shown on ATM machines, advertisements sent by e-mail or text messages, advertisements presented on web sites, or advertisements sent by postal mail. For different customers, the details of the offers may be different.

For example, when a customer accesses an on-line account at the financial institution using a web browser, the customer may be greeted with a welcome web page showing the various services offered by the financial institution. The web page may also display one or more promotional offers tailored toward the customer. The web page may be generated by a computer server of the financial institution. When the customer logs into the on-line account, the computer server at the financial institution determines what promotions to offer to the customer based on, e.g., financial and other information associated with the customer.

For example, if the customer has a home mortgage, the computer server may determine that the customer may be interested in a home equity loan. When the computer server generates the web page to be shown to the customer, a promotional offer from the first campaign product may be inserted into the web page. For example, the offer may provide a new home equity loan with a low interest rate. For example, if the customer does not have a credit card or has a high credit score, the computer server may determine that the customer may be interested in a new credit card. When the computer server generates the web page to be shown to the customer, a promotional offer from the second campaign product may be inserted into the web page, in which the offer may provide information about a new credit card program that offers generous cash-back rewards.

For a given campaign, different offers may be served to different customers. For example, in the first campaign product, a new home equity loan with a 3.5% interest rate may be offered to a first customer having a high credit score and a large combined savings and checking account, a new home equity loan with a 4% interest rate may be offered to a second customer having a high credit score and a small combined savings and checking account, and a new home equity loan with a 4.5% interest rate may be offered to a third customer having a medium credit score.

In the second campaign product, a first type of credit card with an annual fee and slightly higher rewards may be offered to a fourth customer having a high income level, a second type of credit card with no annual fee and slightly lower rewards may be offered to a fifth customer having a medium income level, and a third type of credit card having higher reward points on dining and travel may be offered to a sixth customer who already has a travel credit card with lower reward points. The first and second campaign products may not give any promotional offers to customers who have very low credit scores or are a few months behind in credit card payments.

The financial institution may have hundreds of thousands or millions of customers, so it is useful to partially automate the process of determining what promotions to offer to which customers. In some implementations, business rules similar to those described in U.S. patent 8,069,129, U.S. patent 8,386,408, U.S. patent 8,380,651, U.S. patent 9,002,770, and U.S. patent application 14/677,063 can be used to partially automate the process of evaluating the financial and other data of the customers and determining what promotional offers to provide to the customers. For example, a set of business rules may be authored, such that the rules can be applied to the records of the customers containing financial data to generate outputs including information about which promotional offers are presented to which customers. The business rules may be incorporated into a graph-based application in the graphic development environment 102, and the parallel operating environment 106 may generate executable instructions (e.g., computer instructions) that correspond to the logic and resources defined by the graph that incorporates the business rules.

Each campaign may run for a number of days, weeks, or months. The financial institution may launch a new campaigns every couple of days, weeks, or months. Before each new campaign is launched, the staff members of the financial institution may modify the business rules according the new criteria set by the campaign. In some examples, to ensure the quality of the campaign, three groups of staff members may work on modifying and verifying the business rules. For example, the first group of staff members, which we will refer to as the "Makers," are responsible for activities such as joining data, generating data sets, performing analyses, authoring business rules, running simulations, and profiling data.

For example, the second group of staff members, which we will refer to as the "Checkers," are responsible for activities such as validating that the activities performed by the Makers are consistent with process requirements and corporate policies. For example, the Checkers verify that the campaign or risk objectives are clearly identified and documented, validate the business rules individually and in the aggregate, run the simulations and review the logs for the simulations to confirm the results are consistent with objectives and policies, complete checkpoints, and approves the business rules.

For example, the third group of staff members, which we will refer to as the "Managers," are responsible for reviewing the checkers' comments and recommendations, review audit trails for the generation of the business rules by the Makers and the validation of the business rules by the Checkers, assess the adequacy of controls and validations, and approve or reject progression to the next step in the overall process.

For any given campaign, there may be more than one Maker, more than one Checker, and more than one Manager involved in the authoring, checking, and reviewing of the business rules. It is useful to keep track of who made what changes to the business rules at what time, and keep records (including, e.g., source codes and notes) of different versions of the business rules as the rules are modified over time. Keeping good records not only facilitates debugging and finding sources of errors, it may also help meet certain regulatory requirements.

The following describes an exemplary process for generating business rules for a campaign. Referring to FIG. 26, a flow diagram 1260 represents a high level overview of a process for the generation of business rules for a campaign. At step 1262, data necessary for defining the business rules are prepared. For example, a determination may be made as to which data sources are used and whether data sets need to be joined, merged, filtered, aggregated, or further processed. At step 1264, the campaign for each product is defined. Rules are written to define potential offers related to the business objectives of the financial institution. For example, the criteria for determining when and what promotional offers to give to which customers are defined for each product of the campaign. At step 1266, the business rules for the various products of a campaign are overlapped and combined into an integrated package. At step 1268, the business rules for the entire campaign that includes various products are validated and simulated. Step 1268 ensures that the business rules of different products do not conflict with one another. After the business rules for the whole campaign are simulated and validated, the campaign is ready to be launched at step 1270.

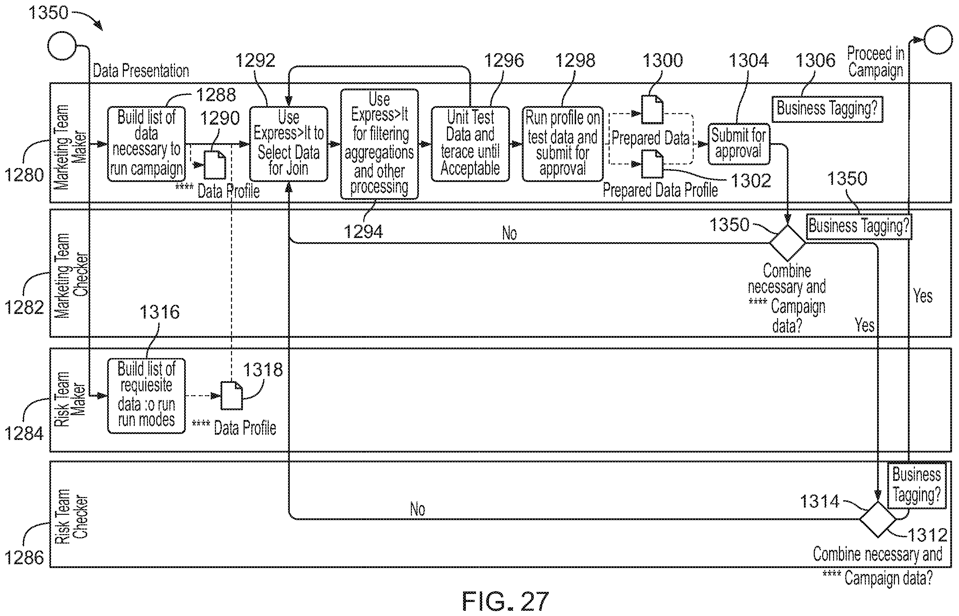

Referring to FIG. 27, in some implementations, a process 1350 is provided for implementing the step for data preparation 1262. The process 1350 may include several steps that are performed by, e.g., a Marketing Team Maker 1280, a Marketing Team Checker 1282, a Risk Team Maker 1284, and a Risk Team Checker 1286. In this example, at step 1288 the Marketing Team Maker 1280 builds a list of data necessary to run the campaign, and selects the marketing data fields 1290 that may be used by the business rules. The Risk Team Maker 1284 at step 1316 builds a list of data that is required to run risk models, and selects risk data fields 1318 that may be used business rules. At step 1292, the system selects data in the marketing data fields 1290 and the risk data fields 1318 for joining. At step 1294, the system performs filtering, aggregation, and other processing on the joined data. At step 1296, the system performs tests on individual units of data. If the data are not acceptable, the process loops back to step 1292 to select the appropriate data to join. If the data are acceptable, in step 1298 a profile of test data is generated, and the data are submitted for approval. At step 1304, a dataset that includes the prepared data 1300 and the prepared data profile 1302 are submitted for approval at step 1304. At step 1306, a business tag may be associated with the dataset that has been submitted for approval by the Marketing Team Maker 1280. For example, the business tag may include information about the state of the dataset, who (e.g., Marketing Team Maker 1280) approved the dataset, and when the dataset was approved for submission.

At step 1308, the Marketing Team Checker 1282 reviews the dataset submitted by the Marketing Team Maker 1280 and determines whether the dataset contains necessary and sufficient campaign data. If the dataset does not contain necessary and sufficient campaign data, the Marketing Team Checker 1282 sends the data back to the Marketing Team Maker 1280, who performs step 1292 again to select data for joining. If the dataset contains necessary and sufficient campaign data, the Marketing Team Checker 1282 approves the dataset. At step 1310, a business tag may be associated with the dataset that has been submitted for approval by the Marketing Team Checker 1282. For example, the business tag may include information about the state of the dataset, who (e.g., Marketing Team Checker 1282) approved the dataset, and when the dataset was approved for review by the Risk Team Checker 1286.

At step 1314, the Risk Team Checker 1286 reviews the dataset to determine whether it contains necessary and sufficient risk data. If the dataset does not contain necessary and sufficient risk data, the Risk Team Checker 1286 sends the dataset back to the Marketing Team Maker 1280, who performs step 1292 again to select data for joining. If the dataset contains necessary and sufficient risk data, the Risk Team Checker 1286 approves the dataset for use by the campaign. At step 1312, a business tag may be associated with the dataset that has been approved by the Risk Team Checker 1286. For example, the business tag may include information about the state of the dataset, who (e.g., Risk Team Checker 1286) approved the dataset, and when the dataset was approved for use by the campaign.

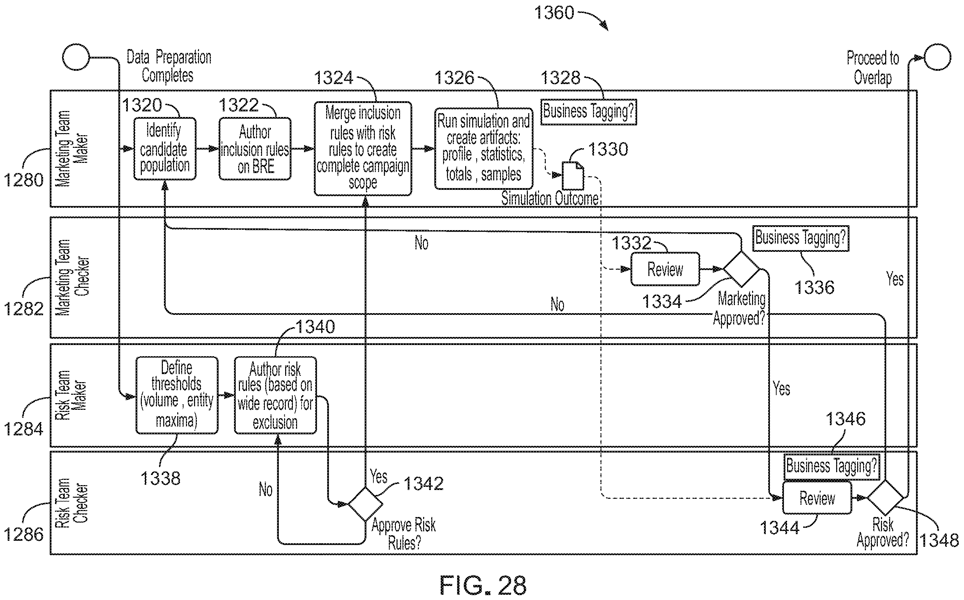

Referring to FIG. 28, in some implementations, a process 1360 is provided implementing the step for authoring and validation for each campaign product 1264. The process 1360 may include several steps that are performed by, e.g., the Marketing Team Maker 1280, the Marketing Team Checker 1282, the Risk Team Maker 1284, and the Risk Team Checker 1286. At step 1320, the Marketing Team Maker 1280 identifies the candidate population for the campaign. For example, the candidate population may be customers who are in a certain age range, have annual income in a certain range, and live within a certain geographical region. At step 1322, the Marketing Team Maker 1280 writes the inclusion rules on the business rule engine (BRE). For example, the inclusion rules may include rules determines which customers are eligible for the promotional offerings.

At step 1338, the Risk Team Maker 1284 defines thresholds (e.g., volume, entity, and maxima) associated with the product offering. For example, one threshold may specify that the total amount of rewards given to all eligible customers for any day or week may not exceed a certain amount. Another threshold may specify that the total number of customers eligible for a product may not exceed a certain value. At step 1340, the Risk Team Maker 1284 writes risk rules for exclusion based on a wide range of records. For example, a risk rule may specify that a customer having a credit score below a certain value, or having a credit card debt above a certain value, is not eligible for the promotional offer.

At step 1342, the Risk Team Checker 1286 evaluates the risk rules. If the risk rules are not appropriate, the risk rules are sent back to step 1340 so that the Risk Team Maker 1284 can rewrite the risk rules. If the risk rules are appropriate, the Risk Team Checker 1286 approves the risk rules.

At step 1324, the inclusion rules are merged with the risk rules to generate a complete campaign scope. At this step, the rules for determining which customers are eligible for a campaign product offering and which customers are high risk and not eligible for the offering are merged together into a ruleset. At step 1326, a simulation is performed to apply the full set of rules to test data to generate simulation outcomes 1330. The simulation outcomes 1330 include outputs from the business rules as well as data for validation (also referred to as artifacts) that may be generated based on a processing of the outputs from the business rules.

The validation data may include the following. A rule coverage report is generated when the simulation is run. The report documents which rules fired, and how many times. This ensures that each rule has been run at least a minimum number of times to guarantee simulation coverage was sufficient. Rules that don't fire enough (or at all) indicate insufficient simulation coverage (bad validation data) or bad rule design. A data profile of the campaign data is generated. This provides information on statistical distribution of data for each product campaign data set. Questions such as "how many customers qualified?" or "How many customers didn't quality" or "were there invalid records" can be answered and compared against expected results. Statistical calculations are performed to generate statistical data. This data provides additional information regarding the population that was qualified for a campaign, and population that was not. Statistics such as mean, median, rank, standard deviation, and outliers for items such as qualifying customer income, qualifying customer credit score, non-qualified income, credit score, can be compared against expected values. Random samples of actual data records are selected for manual review. The sampled data provide a "sanity check" that the values found in the output data do not offend marketing or risk criteria. Campaign cost and overall impact estimates may be generated. This may include a series of simulated cost/benefit models run against a set number of assumed take-rates (e.g., 1%, 3%, 5%, 10%, and 25% ...) for calculating values to include expected campaign value (revenue lift) versus immediate cost (e.g., promotions such as statement credits) versus write-offs (with different credit risk cut-off assumptions) and overall net present value. These are compared with input model assumptions.

At step 1328, a business tag may be associated with the simulation results. For example, the business tag may provide information on who performed the simulation, when the simulation was performed, and what dataset was used to perform the simulation.

The simulation outcomes 1330 are provided to the Marketing Team Checker 1282 for review at step 1332. At step 1334, if the Marketing Team Checker 1282 determines that the simulation outcomes are not appropriate and not consistent with expected outcomes, the process 1360 loops back to step 1320 so that the Marketing Team Maker 1280 can revise the inclusion rules. At step 1336, the Marketing Team Checker may write notes, such as why the simulation outcomes do not meet the campaign goals, and the notes are stored as part of a business tag associated with the ruleset. If the simulation outcomes are appropriate and consistent with expected outcomes, the Marketing Team Checker 1282 approves the rules for review by the Risk Team Checker 1286. At step 1344, the Risk Team Checker 1286 reviews the ruleset that includes the inclusion rules authored by the Marketing Team Maker 1280 and the risk rules authored by the Risk Team Maker 1284. If the Risk Team Checker 1286 determines that the risk is too high, the process loops back to step 1320 so that the Marketing Team Maker 1280 can revise the inclusion rules. At step 1346, the Risk Team Checker may write notes, such as why the simulation outcomes indicate too high a risk, and the notes are stored as part of a business tag associated with the ruleset. If the Risk Team Checker 1286 determines that the risk is acceptable, the ruleset is approved, and the process moves to the next step.

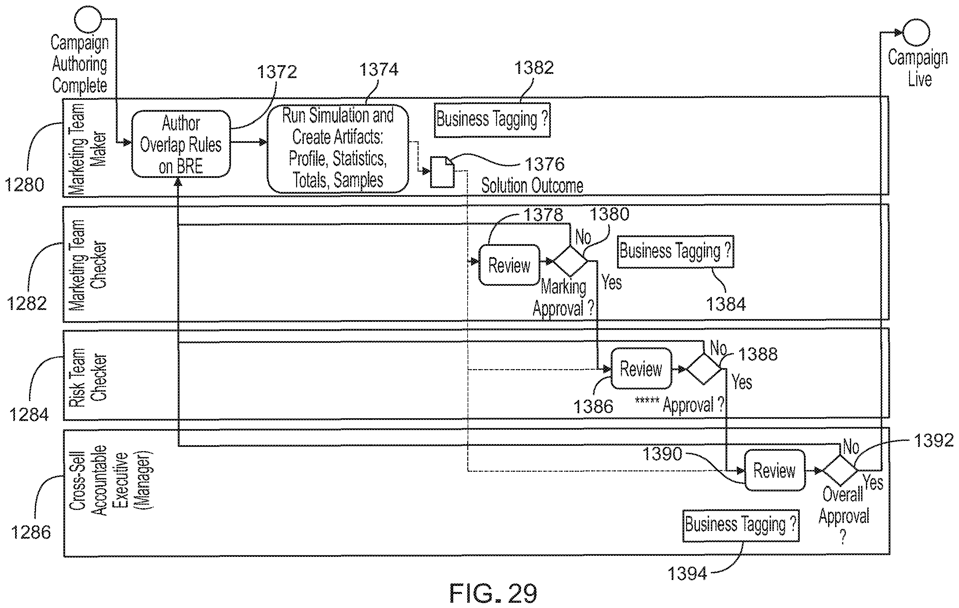

Referring to FIG. 29, in some implementations, a process 1370 is provided to implement the overlap process 1266. The process 1370 may include several steps that are performed by the Marketing Team Maker 1280, the Marketing Team Checker 1282, the Risk Team Checker 1286, and a Cross-Sell Account Executive or Manager 1372. Previously, in the process 1360 shown in FIG. 28, the ruleset for each product is evaluated and approved. The goal of the process 1370 is to verify that the rules for individual products, when combined together, work appropriately and do not produce any conflict. At step 1372, the Marketing Team Maker 1280 writes overlap rules on the business rules engine. For example, the rules may specify the conditions for which two or more products may be offered at the same time. At step 1374, a simulation is performed by applying the full ruleset for all campaign products to test data and generate simulation outcomes 1376. The simulation outcomes 1376 may include outputs from the business rules and data for validation (also referred to as artifacts) that may be generated from a processing of the outputs from the business rules.

The validation data in the simulation outcomes 1376 (which are for the whole package of business rules across various campaign products) are similar to the validation data in the simulation outcomes 1330 (which are for the business rules of individual campaign products), with the difference being that following overlap the information is provided on an aggregate basis (including distribution of each product) as well as on a per-product basis (similar to what was generated on the per-product basis. This allows a comparison of how the values shifted from each product or to each product before and after the overlap process is executed.

At step 1382, a business tag may be associated with the simulation results. For example, the business tag may provide information on who performed the simulation, when the simulation was performed, what datasets were used to perform the simulation, and other notes provided by the Marketing Team Maker 1280 regarding the simulation.

The simulation outcomes 1376 are provided to the Marketing Team Checker 1282 for review at step 1378. At step 1380, if the Marketing Team Checker 1282 determines that the simulation outcomes are not appropriate and not consistent with expected outcomes, the process 1370 loops back to step 1372 so that the Marketing Team Maker 1280 can revise the overlap rules. Perhaps certain products may not overlap certain other products during certain periods, and thus the overlap rules need to be adjusted. At step 1384, the Marketing Team Checker may write notes, such as why the simulation outcomes do not meet the campaign goals, and the notes are stored as part of a business tag associated with the overall ruleset. If the simulation outcomes are appropriate and consistent with expected outcomes, the Marketing Team Checker 1282 approves the rules for review by the Risk Team Checker 1286. At step 1386, the Risk Team Checker 1286 reviews the entire ruleset that includes the overlap rules authored by the Marketing Team Maker 1280. At step 1388, if the Risk Team Checker 1286 determines that the risk is too high, the process loops back to step 1372. If the simulation outcomes are appropriate and the risk is acceptable, the Risk Team Checker 1286 approves the rules for review by the Manager 1372.

At step 1390, the Manager 1372 reviews the whole ruleset that includes the overlap rules authored by the Marketing Team Maker 1280. If the Manager 1372 does not approve the overall package of rules, the process loops back to step 1372 so that the Marketing Team Maker 1280 can revise the overlap rules. At step 1394, the Manager 1372 may write notes, such as why the overall package does not meet the campaign goals or the risk is too high, and the notes are stored as part of a business tag associated with the package of rulesets. If the Manager 1372 approves the overall package of rulesets, the campaign goes live in step 1394.

The processes 1350, 1360, and 1370 show that authoring, checking, and approving business rules for a campaign is a complicated process that involves multiple staff members of the financial institution. The rules may pass back and forth among the Marketing Team Maker 1280, the Marketing Team Checker 1282, the Risk Team Maker 1284, the Risk Team Checker 1286, and the Manager 1372 several times. At each iteration, each staff member needs to know the exact status of each rule, such as whether the rule has been submitted by the Marketing Team Maker 1280 or the Risk Team Maker 1284, whether the rule has been approved by the Marketing Team Checker 1282 or the Risk Team Checker 1286, and whether the rule has been approved by the Manager 1372. During each iteration, notes regarding the rules may be written and stored in business tags.

Several versions of the business rules can be stored. For example, a first version of the business rule for a first campaign product may conflict with the rules for a second campaign product, so the Marketing Team Maker 1280 may decide to store the first version of the business rule and write a second version of the business rule for the first campaign product that does not conflict with the rules for the second campaign product. The first version of the business rule may have certain parameter values that can be useful for later campaigns. By the time the package of rulesets for the whole campaign is approved by the Manager 1372, each campaign product may be associated with several versions of business rules, in which the different versions of the rules may use slightly different parameter values that may be useful under different circumstances.

One of the improvements of the application development system 100 over conventional systems is that the users can access functions provided by the document editor 102, the business process management tool 104, the source code control tool 106, and the application simulator 108 through the integrated user interface 112 without the need to switch between different user interfaces, and without the need to manually copy information from one application to the other. For example, the system 2600 of FIG. 7 has a business process management tool 2612 and a source code control tool 2616 that are "bundled" together in a software suite, but the business process management tool 2612 and the source code control tool 2616 can have different user interfaces and do not share metadata. Thus, for example, using the system 2600, the user can save the source code for several versions of a business rule using the source code control tool 2616, and use the business process management tool 2612 to manage the transition of the rules among different states. The source code control tool 2616 keeps track of which user made what changes to a particular piece of code over time. However, the information about states that are generated by the business process management tool 2612 is not automatically carried over to the source code control tool 2616. Thus, when the source code of the various versions of the business rules is saved, the information about the states generated by the business process management tool 2612 is not saved along with the source code by the source code control tool 2616. Thus, using the system 2600, it can be difficult for the user to retrieve an earlier version of a business rule and determine the state of the rule, such as whether it was "submitted" or "approved," or to determine who authorized the transition of the rule from one state to another. Using the system 2600, the user may have to compare the logs of the source code control tool 2616 and the business process management tool 2612 to match the notes for a particular version of a particular rule in the business process management tool 2612 with the notes of the same particular version of the particular rule in the source code control tool 2616, and try to manually deduce the required information based on the notes.

One of the improvements of the application development system 100 over the non-integrated application development system 2600 is that the application development system 100 can provide functions that cannot be achieved, or would be very difficult to achieve, using the system 2600. For example, an application may evolve over time such that a series of releases of the application are issued over time. Each release of the application may use a package of particular versions of particular rulesets, in which each particular version of the ruleset has a particular state, and the transition to the particular state was approved by a particular user. Different releases of the application may use different packages that includes different versions of the rules. Suppose after several releases of the application have been issued, it is determined that an earlier release of the application did not function properly. In order to determine the cause of the problem, it may be useful to retrieve the particular versions of the particular rulesets used by the particular release of the application that caused the problem, review the logs of the particular versions of the particular rulesets, and determine what changes were made to the rulesets prior to the occurrence of the problem, who made those changes, who approved those changes, and why those changes were made. It may be useful to review the logs of the overall package of rulesets, and determine what changes were made to the package prior to the occurrence of the problem, who made those changes, who approved those changes, and why those changes were made. It may also be useful to execute a first simulation of the earlier release of the application using the particular versions of the particular rulesets used by the earlier release of the application, execute a second simulation of the application using different versions of the particular rulesets, and/or execute a third simulation of the application by changing some parameters of the rulesets. Using the non-integrated application development system 2600, it may be difficult to perform all of the above functions because the source code control tool 2616 does not store the metadata generated by the business process management tool 2612 along with the source code of the rules that are needed to implement the functions mentioned above. Using the non-integrated application development system 2600, while users can manually copy some information from the business process management tool 2612 to the notes section of the source code control tool 2616, because many different users may write, edit, review, and approve the rules, and different people may have different ways of writing notes, the information manually carried over from the business process management tool 2612 to the source code control tool 2616 may not be consistent across different users, making the information difficult to review. By contrast, in the application development system 100, the metadata stored in the repository 110 have standard formats and can be access by all the tools 102, 104, 106, and 108, enabling new functions that cannot be achieved using the non-integrated application development system 2600.

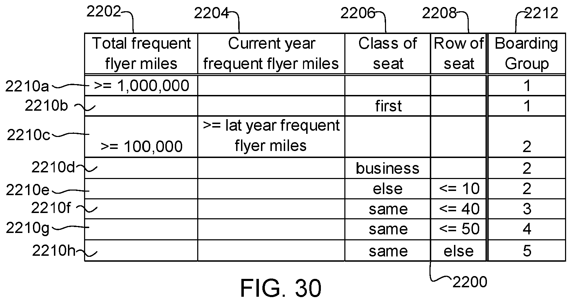

One of the improvements of the application development system 100 over the non-integrated application development system 2600 is that outputs of applying business rules to input records can be automatically updated and displayed after the business rules are edited by the document editor 102. For example, a rule can be entered in a spreadsheet format, as shown in FIG. 30. Trigger columns 2202, 2204, 2206, 2208 in spreadsheet 2200 correspond to available data values, and rows 2210a-h correspond to rule cases, i.e., sets of criteria that relate the available data values. A rule case 2210n applies to a given record (e.g., 402 in FIG. 11A) if the data values of that record, for each trigger column in which the rule case has criteria, meets the triggering criteria. If a rule case 2210n applies, output is generated based on one or more output columns 2212. A rule case that has all of its input relationships satisfied may be referred to as "triggered." Each output column 2212 corresponds to a potential output variable, and the value in the corresponding cell of the applicable row 2210n determines the output, if any, for that variable. The cell could contain a value that is assigned to the variable or it could contain an expression that must be evaluated to generate the output value, as discussed below. There may be more than one output column, though only one is shown in FIG. 30.

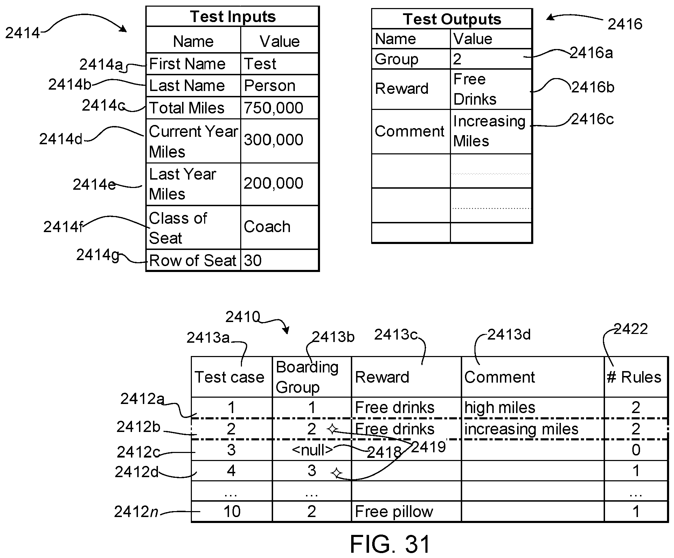

FIG. 31 shows an example of an input test table 2414, an output test table 2416, and a results table 2410 that show the outputs for each of several test cases. In table 2410, the outputs for each test case is displayed in a separate row 2412i with columns 2413a-d showing the test case and the outputs calculated for each case. When one row is selected (in this example, the second case or row 2412b is selected and shown by a dashed line), the input values 2414a-2414g from the corresponding test case are shown in an input table 2414. The outputs 2416a-2416c for that test case are shown in an output table 2416. The outputs 2416i (i = a, b, c) shown in the table 2416 could be the expected outputs from the test case, the actual outputs computed, or both. Various interface cues can be used to inform the user about the status of the test. For example, icons 2419 indicate that the output in rows 2412b and 2412d for test cases 2 and 4 have changed since the last time the rule set was tested. If there is no "default" rule to catch combinations of input values that don't match any other rule, test cases having such inputs produce a null output 2418. If an input record is rejected with a processing error, such as division by zero, an error may be indicated in the same way. If more than one rule case is triggered by a test case, the number of triggered rule cases may be indicated (2422). By interacting with one of the displayed outputs, for example, by clicking on it, the user can be taken to a screen that details how that output was determined.

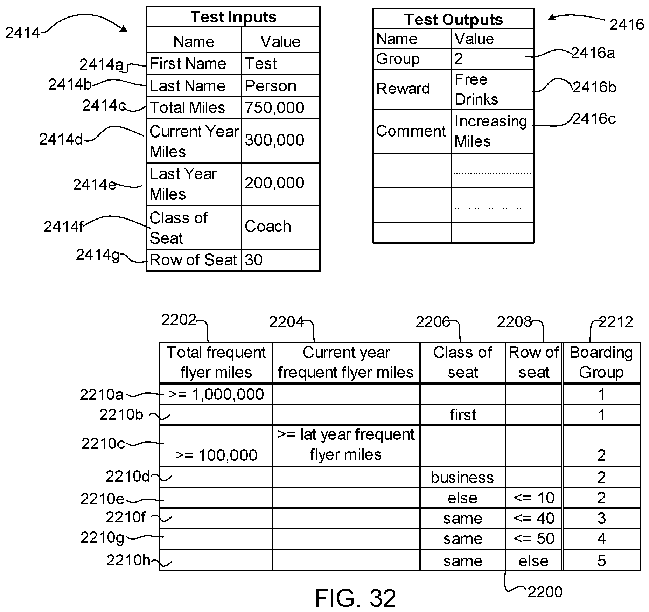

In some implementations, because the application development system 100 integrates the document editor 102 and the application simulator 108, the system 100 can provide a user interface in which the ruleset is shown beside the test inputs and test outputs, as illustrated in FIG. 32. For example, when the user changes the trigger columns 2202, 2204, 2206, 2208 in spreadsheet 2200, the system 100 can automatically update the test output values 2416i (i = a, b, c) shown in the output test table 2416. This allows the user to experiment with different rules and quickly receive feedback, allowing the user to optimize the rule in an efficient manner. In the example above, when the user makes a change to the ruleset in the spreadsheet 2200 using the document editor 102, the system 100 automatically invokes the application simulator 108 to convert the ruleset into a transform, associate the transform with a component in the graph-based computation, execute the graph-based computation, and use the output results of the execution to update the output test table 2416. The system 100 can give the user the option of turning on or off the simulator 108. The system 100 can also give the user to option of either automatically updating the output when a change is made to the rules, or updating the output only when the user makes such a request.

The integrated user interface 112 (FIG. 1) enables the user to access the functionalities of the document editor 102, business process management tool 104, the source code control tool 106, the application simulator 108, and the common log data object 116 can be, e.g., one or more graphical user interfaces that is/are shown on one or more displays that is/are controlled by one or more computer servers. The integrated user interface 112 can show information generated by modules executing on one or more computer servers.

In the example of FIG. 2, the integrated user interface 112 includes the editor interface 2720, the business process management interface 2722, the source code control interface 2724, the application simulation interface 2726, and the common log interface 2728 that are shown on a computer display. Two or more of the interfaces 2720, 2722, 2724, 2726, 2728 can be shown to the user at the same time. The interfaces 2720, 2722, 2724, 2726, 2728 can also be shown to the user one at a time.

The integrated user interface 112 is configured to allow the user to conveniently use one of the tools and access another one of the tools. For example, the source code control interface 2724 can show a list of rules, some of the rules each having multiple versions. The user can right click on a particular version of a particular rule, e.g., version 1.0 of "Rule ABC," and a menu will appear to enable the user to, e.g., edit the selected rule, simulate execution of the selected rule, change the state of the selected rule, or view log information related to the selected rule.

If the user selects "Edit rule" item in the menu, the document editor 102 is invoked and the editor interface 2720 is shown on the display to enable the user to edit the selected rule, which in this example is version 1.0 of "Rule ABC." When the editor interface 2720 is shown on the display, the editor interface 2720 includes user selectable elements (e.g., buttons, menus, links) that enables the user to access the business process management tool 104, the source code control tool 106, the application simulator 108, and the common log data object 116.

For example, while the editor interface 2720 is shown on the display, the user may decide to change the state of the rule by invoking the business process management tool 104, and the business process management interface 2722 is shown on the display. The business process management interface 2722 includes user selectable elements (e.g., buttons, menus, links) that enables the user to access the document editor 102, the source code control tool 106, the application simulator 108, and the common log data object 116.

For example, while the business process management interface 2722 is shown on the display, the user may decide to simulate execution of the rule by invoking the application simulator 108, and the application simulation interface 2726 is shown on the display. The application simulation interface 2726 includes user selectable elements (e.g., buttons, menus, links) that enables the user to access the document editor 102, the business process management tool 104, the source code control tool 106, and the common log data object 116.

For example, when the application simulation interface 2726 is shown on the display, the user may decide to view the log information related to the rule by accessing the common log data object 116, and the common log interface 2728 is shown on the display. The common log interface 2728 includes user selectable elements (e.g., buttons, menus, links) that enables the user to access the document editor 102, the business process management tool 104, the source code control tool 106, and the simulator 108.

In some implementations, any combination of the editor interface 2720, the business process management interface 2722, the source code control interface 2724, the application simulation interface 2726, and the common log interface 2728 can be shown to the user simultaneously.

The object generating, linking, business tagging, rule editing, rule simulation, business rule process management, and rule source code management approaches described above can be implemented using software for execution on a computer. For instance, the software forms procedures in one or more computer programs that execute on one or more programmed or programmable computer systems (which may be of various architectures such as distributed, client/server, or grid) each including at least one processor, at least one data storage system (including volatile and non-volatile memory and/or storage elements), at least one input device or port, and at least one output device or port. The software may form one or more modules of a larger program, for example, that provides other services related to the design and configuration of computation graphs. The nodes and elements of the graph can be implemented as data structures stored in a computer readable medium or other organized data conforming to a data model stored in a data repository.

The software may be provided on a medium, such as a CD-ROM, readable by a general or special purpose programmable computer or delivered (encoded in a propagated signal) over a network to the computer where it is executed. All of the functions may be performed on a special purpose computer, or using special-purpose hardware, such as coprocessors. The software may be implemented in a distributed manner in which different parts of the computation specified by the software are performed by different computers. Each such computer program is preferably stored on or downloaded to a storage media or device (e.g., solid state memory or media, or magnetic or optical media) readable by a general or special purpose programmable computer, for configuring and operating the computer when the storage media or device is read by the computer system to perform the procedures described herein. The inventive system may also be considered to be implemented as a computer-readable storage medium, configured with a computer program, where the storage medium so configured causes a computer system to operate in a specific and predefined manner to perform the functions described herein.

A number of embodiments of the description have been described. Nevertheless, it will be understood that various modifications may be made without departing from the scope of the description. It is to be understood that the foregoing description is intended to illustrate and not to limit the scope of the description, which is defined by the scope of the appended claims.

In some implementations, the integrated user interface 112 can provide one or more formats of information, e.g., text, graphics, images, audio, video, and/or haptic feedback to the users 90 using, e.g., display devices, audio output devices, and/or haptic devices. The information can be presented to the users 90 using augmented or virtual reality systems. The integrated user interface 112 can accept user inputs from one or more input devices, such as keyboards, mice, trackballs, joysticks, touchpads, touch screens, microphones, cameras, eye tracking devices, gesture detection devices, and/or motion sensors.

For example, the user 90 can edit a ruleset shown on a computer display screen. The user 90 can wear augmented reality eyeglasses, and output data derived from simulations of executing an application that uses the ruleset to process input records can be projected to appear above the computer display screen. Information related to source code control can be projected to appear to the left of the computer display screen, and information related to business process management can be projected to appear to the right of the computer display. When the user 90 edits the ruleset, the revised output data is projected above the computer display screen. When the user 90 checks out a ruleset by interacting with the elements related to source code control projected to the left of the computer display screen, the selected ruleset is shown on the computer display screen, the relevant state information is projected to the right of the computer display screen, and simulation outputs are projected above the computer display screen.

Other embodiments are within the scope of the following claims.

## Claims

1. A computer-implemented method for managing one or more rules for use with an application program in a data processing system, the method including:
providing an integrated user interface (112) to enable users to access an integrated application development system (100) that enables version control and business process management of rulesets, in which each ruleset includes one or more rules, each rule including one or more rule cases that compute values for the rule's output depending on the rule's input, and each rule case includes one or more input relationships in which a rule case is triggered by a given input record if one or more data values of the given input record meet the one or more input relationships;
storing multiple versions of a first ruleset in a repository (110);
storing at least one log data object (116) having information about the multiple versions of the first ruleset in the repository (110);
receiving, through a first user interface of the integrated user interface (112), instructions from a first user associated with a first user identifier; and
in response to the instructions from the first user,
selecting a particular version of the first ruleset from a plurality of versions of the first ruleset stored in the repository (110), and
transitioning the particular version of the first ruleset from a first state of a plurality of states associated with the first ruleset to a second state of the plurality of states, in which the second state is different from the first state; and
storing in a log data object (116) associated with the particular version of the first ruleset at least one of:
(i) information specifying that a user associated with the first user identifier selected the particular version of the first ruleset from the repository (110) and the user associated with the first user identifier approved the transition of the particular version of the first ruleset from the first state to the second state, or
(ii) information specifying that the selecting of the particular version of the first ruleset from the repository (110) is associated with a first timestamp, and the transition of the particular version of the first ruleset from the first state to the second state is associated with a second timestamp.

2. The method of claim 1, including receiving, through the integrated user interface (112), second instructions from a second user associated with a second user identifier;
in response to the second instructions from the second user,
selecting a group of two or more rulesets from a plurality of rulesets stored in the repository (110), each ruleset being a particular version of the ruleset selected from a plurality of versions of the ruleset, and
associating the group of selected rulesets with a release tag;
receiving, through the integrated user interface (112), third instructions from a third user associated with a third user identifier; and
in response to the third instructions from the third user,
transitioning the release tag from a first state of a plurality of states to a second state of the plurality of states.

3. The method of claim 2, including storing in a log data object (116) associated with the release tag at least one of:
(i) information specifying that a user associated with the second user identifier selected the group of rulesets and the user associated with the third user identifier approved the transition of release tag from the first state to the second state, or
(ii) information specifying that the selecting of the group of rulesets is associated with a third timestamp, and the transition of the release tag from the first state to the second state is associated with a fourth timestamp.

4. The method of claim 1, in which the first state indicates that the first ruleset is a draft that is still being edited, and the second state indicates that the first ruleset is ready for review by a reviewer.

5. The method of claim 1, in which the first state indicates that the first ruleset is ready for review by a user having authority to approve the first ruleset for release, and the second state indicates that the first ruleset is finalized and ready to be released.

6. The method of claim 1, in which each ruleset corresponds to at least one of a software module or a data processing entity that transforms input data to output data.

7. The method of claim 1, in which the integrated application development system (100) includes a source code control module and a business process management module, the source code control module processes the selecting of the particular version of the first ruleset, and the business process management module processes the transitioning of the particular version of the first ruleset from the first state to the second state.

8. The method of claim 7, in which the source code control module processes the storing in the log data object (116) of at least one of (i) information specifying that the first user selected the particular version of the first ruleset from the repository (110), or (ii) information specifying that the selecting of the particular version of the first ruleset from the repository (110) is associated with the first timestamp, and
the business process management module processes the storing in the log data object (116) of at least one of (i) information specifying that the first user approved the transition of the particular version of the first ruleset from the first state to the second state, or (ii) information specifying that the transition of the particular version of the first ruleset from the first state to the second state is associated with the second timestamp.

9. The method of claim 1, including checking out the particular version of the first ruleset from the repository (110) and before checking in the particular version of the first ruleset back into the repository (110), locking the particular version of the first ruleset stored in the repository (110) to prevent other users from modifying the particular version of the first ruleset in the repository (110).

10. The method of claim 1, including:
receiving, through a second user interface of the integrated user interface (112), instructions from a second user associated with a second user identifier;
in response to the instructions from the second user,
selecting the particular version of the first ruleset from a plurality of versions of the first ruleset stored in the repository (110), and
performing at least one of
(i) associating an application program with the particular version of the first ruleset, and simulating execution of the application program to process input records and produce outputs according to one or more rules of the particular version of the first ruleset, or
(ii) retrieving stored outputs produced from a prior simulation of execution of an application program that processed input records to produce the outputs according to one or more rules of the particular version of the first ruleset.

11. The method of claim 10, including storing in the log data object (116) associated with the particular version of the first ruleset at least one of:
(i) information specifying that a user associated with the second user identifier selected the particular version of the first ruleset from the repository (110) and the user associated with the second user identifier simulated execution of the application program using the particular version of the first ruleset to produce outputs,
(ii) information specifying that a user associated with the second user identifier selected the particular version of the first ruleset from the repository (110) and the user associated with the second user identifier retrieved stored outputs produced from a prior simulation of execution of the application program using the particular version of the first ruleset,
(iii) information specifying that the selecting of the particular version of the first ruleset from the repository (110) is associated with a third timestamp, and the simulation of the execution of the application program using the particular version of the first ruleset to produce outputs is associated with a fourth timestamp, or
(iv) information specifying that the selecting of the particular version of the first ruleset from the repository (110) is associated with a third timestamp, and the retrieval of stored outputs produced from a prior simulation of execution of the application program using the particular version of the first ruleset is associated with a fourth timestamp.

12. The method of claim 11, in which the integrated application development system (100) includes a source code control module and a simulation module, the source code control module processes the storing in the log data object (116) of at least one of:
(i) information specifying that a user associated with the second user identifier selected the particular version of the first ruleset from the repository (110), or
(ii) information specifying that the selecting of the particular version of the first ruleset from the repository (110) is associated with the first timestamp, and
the simulation module processes the storing in the log data object (116) of at least one of:
(i) information specifying that a user associated with the second user identifier simulated execution of the application program using the particular version of the first ruleset to produce outputs,
(ii) information specifying that a user associated with the second user identifier retrieved stored outputs produced from a prior simulation of execution of the application program using the particular version of the first ruleset,
(iii) information specifying that the simulation of execution of the application program using the particular version of the first ruleset to produce outputs is associated with the second timestamp, or
(iv) information specifying that the retrieval of stored outputs produced from a prior simulation of execution of the application program using the particular version of the first ruleset is associated with the second timestamp.

13. The method of claim 10, in which the integrated application development system (100) includes a source code control module and a simulation module, the source code control module processes the selecting of the particular version of the first ruleset, and the simulation module processes the simulation of execution of the application program to process input records and produce outputs according to rules of the particular version of the first ruleset.

14. The method of claim 10, in which the first user interface is provided at a computer terminal of the first user and the second user interface is provided at a computer terminal of the second user.

15. The method of claim 1, including:
in response to the instructions from the first user, editing the particular version of the first ruleset;
storing the edited particular version of the first ruleset in the repository (110), and
storing in the log data object (116) associated with the particular version of the first ruleset at least one of:
(i) information specifying that the first user edited the particular version of the first ruleset, or
(ii) information specifying that the modification of the particular version of the first ruleset is associated with a third timestamp.

16. The method of claim 15, in which the integrated application development system (100) includes a source code control module, a business process management module, and a rule editor,
the source code control module processes the selecting of the particular version of the first ruleset,
the business process management module processes the transitioning of the particular version of the first ruleset from the first state to the second state, and
the rule editor processes the editing of the particular version of the first ruleset.

17. A computer-readable medium storing a computer program for managing one or more rules for use with an application program in a data processing system, the computer program including instructions for causing a computer system to perform the operations of the method of any one of claims 1 to 16.

18. A system for managing one or more rules for use with an application program, the system including:
a data storage system storing one or more rules;
at least one output device or port for providing a graphical user interface; and
a computer system coupled to the data storage system and the at least one output device or port, including circuitry to perform the operations of the method of any one of claims 1 to 16.

## Patentansprüche

1. Computerimplementiertes Verfahren zur Verwaltung einer oder mehrerer Regeln zur Verwendung mit einem Anwendungsprogramm in einem Datenverarbeitungssystem, wobei das Verfahren Folgendes umfasst:
Bereitstellen einer integrierten Benutzerschnittstelle (112), um es Benutzern zu ermöglichen, auf ein integriertes Anwendungsentwicklungssystem (100) zuzugreifen, das Versionskontrolle und Geschäftsprozessmanagement von Regelsätzen ermöglicht, wobei jeder Regelsatz eine oder mehrere Regeln enthält, wobei jede Regel einen oder mehrere Regelfälle enthält, die Werte für die Regelausgabe in Abhängigkeit von der Regeleingabe berechnen, und jeder Regelfall eine oder mehrere Eingabebeziehungen enthält, wobei ein Regelfall durch einen gegebenen Eingabedatensatz ausgelöst wird, wenn ein oder mehrere Datenwerte des gegebenen Eingabedatensatzes die eine oder mehreren Eingabebeziehungen erfüllen;
Speichern mehrerer Versionen eines ersten Regelsatzes in einem Repository (110);
Speichern mindestens eines Protokolldatenobjekts (116) mit Informationen über die mehreren Versionen des ersten Regelsatzes in dem Repository (110);
Empfangen, über eine erste Benutzerschnittstelle der integrierten Benutzerschnittstelle (112), von Anweisungen von einem ersten Benutzer, der mit einem ersten Benutzeridentifikator verbunden ist; und
als Reaktion auf die Anweisungen des ersten Benutzers,
Auswählen einer bestimmten Version des ersten Regelsatzes aus einer Vielzahl von Versionen des ersten Regelsatzes, die in dem Repository (110) gespeichert sind, und
Umstellen der bestimmten Version des ersten Regelsatzes von einem ersten Zustand einer Vielzahl von Zuständen, die dem ersten Regelsatz zugeordnet sind, in einen zweiten Zustand der Vielzahl von Zuständen, wobei sich der zweite Zustand von dem ersten Zustand unterscheidet; und
Speichern in einem Protokolldatenobjekt (116), das mit der bestimmten Version des ersten Regelsatzes verbunden ist, mindestens eines von:
(i) Informationen, die angeben, dass ein mit dem ersten Benutzeridentifikator verbundener Benutzer die bestimmte Version des ersten Regelsatzes aus dem Repository (110) ausgewählt hat und der mit dem ersten Benutzeridentifikator verbundene Benutzer den Übergang der bestimmten Version des ersten Regelsatzes vom ersten Zustand in den zweiten Zustand genehmigt hat, oder
(ii) Informationen, die angeben, dass die Auswahl der bestimmten Version des ersten Regelsatzes aus dem Repository (110) mit einem ersten Zeitstempel und der Übergang der bestimmten Version des ersten Regelsatzes vom ersten Zustand zum zweiten Zustand mit einem zweiten Zeitstempel verbunden ist.

2. Verfahren nach Anspruch 1, einschließlich des Empfangs, über die integrierte Benutzerschnittstelle (112), von zweiten Anweisungen von einem zweiten Benutzer, der einem zweiten Benutzeridentifikator zugeordnet ist;
als Reaktion auf die zweiten Anweisungen des zweiten Benutzers,
Auswählen einer Gruppe von zwei oder mehr Regelsätzen aus einer Vielzahl von im Repository (110) gespeicherten Regelsätzen, wobei jeder Regelsatz eine bestimmte Version des aus einer Vielzahl von Versionen des Regelsatzes ausgewählten Regelsatzes ist, und
Verbinden der Gruppe ausgewählter Regelsätze mit einem Freigabe-Tag;
Empfangen, durch die integrierte Benutzerschnittstelle (112), dritter Anweisungen von einem dritten Benutzer, der mit einem dritten Benutzeridentifikator verbunden ist; und
als Reaktion auf die dritten Anweisungen des dritten Benutzers,
Umstellen des Freigabe-Tags von einem ersten Zustand aus einer Vielzahl von Zuständen in einen zweiten Zustand aus der Vielzahl von Zuständen.

3. Verfahren nach Anspruch 2, einschließlich des Speicherns in einem Protokolldatenobjekt (116), das mit dem Freigabe-Tag verbunden ist, von mindestens einem der folgenden Elemente:
(i) Informationen, die angeben, dass ein mit dem zweiten Benutzeridentifikator verbundener Benutzer die Gruppe von Regelsätzen ausgewählt hat und der mit dem dritten Benutzeridentifikator verbundene Benutzer den Übergang des Freigabe-Tags vom ersten Zustand in den zweiten Zustand genehmigt hat, oder
(ii) Informationen, die angeben, dass das Auswählen der Gruppe von Regelsätzen mit einem dritten Zeitstempel und der Übergang des Freigabe-Tags vom ersten Zustand in den zweiten Zustand mit einem vierten Zeitstempel verbunden ist.

4. Verfahren nach Anspruch 1, bei dem der erste Zustand anzeigt, dass der erste Regelsatz ein Entwurf ist, der noch bearbeitet wird, und der zweite Zustand anzeigt, dass der erste Regelsatz zur Überprüfung durch einen Prüfer bereit ist.

5. Verfahren nach Anspruch 1, bei dem der erste Zustand anzeigt, dass der erste Regelsatz zur Überprüfung durch einen Benutzer bereit ist, der die Berechtigung hat, den ersten Regelsatz zur Freigabe zu genehmigen, und der zweite Zustand anzeigt, dass der erste Regelsatz fertiggestellt ist und zur Freigabe bereit ist.

6. Verfahren nach Anspruch 1, bei dem jeder Regelsatz mindestens einem Softwaremodul oder einer Datenverarbeitungseinheit entspricht, die Eingabedaten in Ausgabedaten umwandelt.

7. Verfahren nach Anspruch 1, bei dem das integrierte Anwendungsentwicklungssystem (100) ein Quellcode-Steuermodul und ein Geschäftsprozess-Managementmodul umfasst, wobei das Quellcode-Steuermodul die Auswahl der bestimmten Version des ersten Regelsatzes verarbeitet und das Geschäftsprozess-Managementmodul den Übergang der bestimmten Version des ersten Regelsatzes vom ersten Zustand zum zweiten Zustand verarbeitet.

8. Verfahren nach Anspruch 7, bei dem das Quellcode-Steuermodul die Speicherung in dem Protokolldatenobjekt (116) von mindestens einem der folgenden Elemente verarbeitet
(i) Informationen, die angeben, dass der erste Benutzer die bestimmte Version des ersten Regelsatzes aus dem Repository (110) ausgewählt hat, oder
(ii) Informationen, die angeben, dass das Auswählen der bestimmten Version des ersten Regelsatzes aus dem Repository (110) mit dem ersten Zeitstempel verbunden ist, und
das Geschäftsprozess-Managementmodul verarbeitet das Speichern im Protokolldatenobjekt (116) von mindestens einem der folgenden Elemente
(i) Informationen, die angeben, dass der erste Benutzer den Übergang der bestimmten Version des ersten Regelsatzes vom ersten Zustand in den zweiten Zustand genehmigt hat, oder
(ii) Informationen, die angeben, dass der Übergang der bestimmten Version des ersten Regelsatzes vom ersten Zustand zum zweiten Zustand mit dem zweiten Zeitstempel verbunden ist.

9. Verfahren nach Anspruch 1, umfassend das Auschecken der bestimmten Version des ersten Regelsatzes aus dem Repository (110) und vor dem Einchecken der bestimmten Version des ersten Regelsatzes zurück in das Repository (110) das Sperren der bestimmten Version des ersten Regelsatzes, die in dem Repository (110) gespeichert ist, um zu verhindern, dass andere Benutzer die bestimmte Version des ersten Regelsatzes in dem Repository (110) modifizieren.

10. Verfahren nach Anspruch 1, das Folgendes beinhaltet:
Empfangen von Anweisungen von einem zweiten Benutzer, der mit einem zweiten Benutzeridentifikator verbunden ist, über eine zweite Benutzerschnittstelle der integrierten Benutzerschnittstelle (112);
als Reaktion auf die Anweisungen des zweiten Benutzers,
Auswählen der bestimmten Version des ersten Regelsatzes aus einer Vielzahl von Versionen des ersten Regelsatzes, die in dem Repository (110) gespeichert sind, und Ausführen von mindestens einer der folgenden Operationen
(i) Assoziieren eines Anwendungsprogramms mit der bestimmten Version des ersten Regelsatzes und Simulieren der Ausführung des Anwendungsprogramms, um Eingabedatensätze zu verarbeiten und Ausgaben gemäß einer oder mehrerer Regeln der bestimmten Version des ersten Regelsatzes zu erzeugen, oder
(ii) Abrufen gespeicherter Ausgaben, die aus einer früheren Simulation der Ausführung eines Anwendungsprogramms erzeugt wurden, das Eingabedatensätze verarbeitet hat, um die Ausgaben gemäß einer oder mehrerer Regeln der bestimmten Version des ersten Regelsatzes zu erzeugen.

11. Verfahren nach Anspruch 10, einschließlich des Speicherns im Protokolldatenobjekt (116), das mit der bestimmten Version des ersten Regelsatzes verbunden ist, von mindestens einem der folgenden Elemente:
(i) Informationen, die angeben, dass ein mit dem zweiten Benutzeridentifikator verbundener Benutzer die bestimmte Version des ersten Regelsatzes aus dem Repository (110) ausgewählt hat und der mit dem zweiten Benutzeridentifikator verbundene Benutzer die Ausführung des Anwendungsprogramms unter Verwendung der bestimmten Version des ersten Regelsatzes simuliert hat, um Ausgaben zu erzeugen,
(ii) Informationen, die angeben, dass ein mit dem zweiten Benutzeridentifikator verbundener Benutzer die bestimmte Version des ersten Regelsatzes aus dem Repository (110) ausgewählt hat, und der mit dem zweiten Benutzeridentifikator verbundene Benutzer gespeicherte Ausgaben abgerufen hat, die aus einer vorherigen Simulation der Ausführung des Anwendungsprogramms unter Verwendung der bestimmten Version des ersten Regelsatzes erzeugt wurden,
(iii) Informationen, die angeben, dass das Auswählen der bestimmten Version des ersten Regelsatzes aus dem Repository (110) mit einem dritten Zeitstempel und die Simulation der Ausführung des Anwendungsprogramms unter Verwendung der bestimmten Version des ersten Regelsatzes zur Erzeugung von Ausgaben mit einem vierten Zeitstempel verbunden ist, oder
(iv) Informationen, die angeben, dass das Auswählen der bestimmten Version des ersten Regelsatzes aus dem Repository (110) mit einem dritten Zeitstempel und das Abrufen gespeicherter Ausgaben, die aus einer früheren Simulation der Ausführung des Anwendungsprogramms unter Verwendung der bestimmten Version des ersten Regelsatzes erzeugt wurden, mit einem vierten Zeitstempel verbunden ist.

12. Verfahren nach Anspruch 11, bei dem das integrierte Anwendungsentwicklungssystem (100) ein Quellcode-Steuermodul und ein Simulationsmodul enthält, wobei das Quellcode-Steuermodul die Speicherung von mindestens einem der folgenden Elemente in dem Protokolldatenobjekt (116) verarbeitet:
(i) Informationen, die angeben, dass ein mit dem zweiten Benutzeridentifikator verbundener Benutzer die bestimmte Version des ersten Regelsatzes aus dem Repository (110) ausgewählt hat, oder
(ii) Informationen, die angeben, dass das Auswählen der bestimmten Version des ersten Regelsatzes aus dem Repository (110) mit dem ersten Zeitstempel verbunden ist, und das Simulationsmodul verarbeitet das Speichern in dem Protokolldatenobjekt (116) von mindestens einem der folgenden Elemente:
(i) Informationen, die angeben, dass ein mit dem zweiten Benutzeridentifikator verbundener Benutzer die Ausführung des Anwendungsprogramms unter Verwendung der bestimmten Version des ersten Regelsatzes simuliert hat, um Ausgaben zu erzeugen,
(ii) Informationen, die angeben, dass ein mit dem zweiten Benutzeridentifikator verbundener Benutzer gespeicherte Ausgaben abgerufen hat, die aus einer früheren Simulation der Ausführung des Anwendungsprogramms unter Verwendung der bestimmten Version des ersten Regelsatzes erzeugt wurden,
(iii) Informationen, die angeben, dass die Simulation der Ausführung des Anwendungsprogramms unter Verwendung der bestimmten Version des ersten Regelsatzes zur Erzeugung von Ausgaben mit dem zweiten Zeitstempel verbunden ist, oder
(iv) Informationen, die angeben, dass das Abrufen gespeicherter Ausgaben, die aus einer früheren Simulation der Ausführung des Anwendungsprogramms unter Verwendung der bestimmten Version des ersten Regelsatzes erzeugt wurden, mit dem zweiten Zeitstempel verbunden ist.

13. Verfahren nach Anspruch 10, bei dem das integrierte Anwendungsentwicklungssystem (100) ein Quellcode-Steuermodul und ein Simulationsmodul enthält, wobei das Quellcode-Steuermodul die Auswahl der bestimmten Version des ersten Regelsatzes verarbeitet und das Simulationsmodul die Simulation der Ausführung des Anwendungsprogramms verarbeitet, um Eingabedatensätze zu verarbeiten und Ausgaben gemäß den Regeln der bestimmten Version des ersten Regelsatzes zu erzeugen.

14. Verfahren nach Anspruch 10, bei dem die erste Benutzerschnittstelle an einem Computerterminal des ersten Benutzers und die zweite Benutzerschnittstelle an einem Computerterminal des zweiten Benutzers bereitgestellt wird.

15. Verfahren nach Anspruch 1, das Folgendes beinhaltet:
als Reaktion auf die Anweisungen des ersten Benutzers, Bearbeiten der bestimmten Version des ersten Regelsatzes;
Speichern der bearbeiteten speziellen Version des ersten Regelsatzes im Repository (110), und
Speichern in dem Protokolldatenobjekt (116), das mit der bestimmten Version des ersten Regelsatzes verbunden ist, mindestens eines der folgenden Elemente:
(i) Informationen, die angeben, dass der erste Benutzer die bestimmte Version des ersten Regelsatzes bearbeitet hat, oder
(ii) Informationen, die angeben, dass die Änderung der bestimmten Version des ersten Regelsatzes mit einem dritten Zeitstempel verbunden ist.

16. Verfahren nach Anspruch 15, bei dem das integrierte Anwendungsentwicklungssystem (100) ein Quellcode-Steuermodul, ein Geschäftsprozess-Managementmodul und einen Regeleditor umfasst,
wobei das Quellcode-Steuermodul die Auswahl der jeweiligen Version des ersten Regelsatzes verarbeitet,
das Geschäftsprozess-Managementmodul den Übergang der bestimmten Version des ersten Regelsatzes vom ersten Zustand in den zweiten Zustand verarbeitet, und
der Regeleditor die Bearbeitung der jeweiligen Version des ersten Regelsatzes verarbeitet.

17. Computerlesbares Medium, das ein Computerprogramm zum Verwalten einer oder mehrerer Regeln zur Verwendung mit einem Anwendungsprogramm in einem Datenverarbeitungssystem speichert, wobei das Computerprogramm Anweisungen enthält, um ein Computersystem zu veranlassen, die Operationen des Verfahrens nach einem der Ansprüche 1 bis 16 durchzuführen.

18. System zum Verwalten einer oder mehrerer Regeln zur Verwendung mit einem Anwendungsprogramm, wobei das System Folgendes umfasst:
ein Datenspeichersystem, das eine oder mehrere Regeln speichert;
mindestens ein Ausgabegerät oder einen Anschluss zur Bereitstellung einer grafischen Benutzerschnittstelle; und
ein Computersystem, das mit dem Datenspeichersystem und dem mindestens einen Ausgabegerät oder Anschluss verbunden ist und eine Schaltung zur Durchführung der Operationen des Verfahrens nach einem der Ansprüche 1 bis 16 enthält.

## Revendications

1. Procédé, mis en œuvre par ordinateur, de gestion d'une ou de plusieurs règles à utiliser avec un programme d'application dans un système de traitement de données, le procédé comportant :
la fourniture d'une interface utilisateur intégrée (112) pour permettre à des utilisateurs d'accéder à un système de développement d'applications intégré (100) qui permet le contrôle de versions et la gestion de processus métier de jeux de règles, chaque jeu de règles comportant une ou plusieurs règles, chaque règle comportant un ou plusieurs cas de règle qui calculent des valeurs pour la sortie de la règle en fonction de l'entrée de la règle, et chaque cas de règle comportant une ou plusieurs relations d'entrée, un cas de règle étant déclenché par un enregistrement d'entrée donné si une ou plusieurs valeurs de données de l'enregistrement d'entrée donné vérifient les une ou plusieurs relations d'entrée ;
le stockage de versions multiples d'un premier jeu de règles dans un référentiel (110) ;
le stockage d'au moins un objet de données de journal (116) possédant des informations concernant les versions multiples du premier jeu de règles dans le référentiel (110) ;
la réception, par le biais d'une première interface utilisateur de l'interface utilisateur intégrée (112), d'instructions provenant d'un premier utilisateur associé à un premier identifiant d'utilisateur ; et
en réponse aux instructions provenant du premier utilisateur,
la sélection d'une version particulière du premier jeu de règles parmi une pluralité de versions du premier jeu de règles stockées dans le référentiel (110), et
la transition de la version particulière du premier jeu de règles d'un premier état parmi une pluralité d'états associés au premier jeu de règles vers un deuxième état parmi la pluralité d'états, le deuxième état étant différent du premier état ; et
le stockage, dans l'objet de données de journal (116) associé à la version particulière du premier jeu de règles :
(i) d'informations spécifiant qu'un utilisateur associé au premier identifiant d'utilisateur a sélectionné la version particulière du premier jeu de règles dans le référentiel (110) et que l'utilisateur associé au premier identifiant d'utilisateur a approuvé la transition de la version particulière du premier jeu de règles du premier état vers le deuxième état, et/ou
(ii) d'informations spécifiant que la sélection de la version particulière du premier jeu de règles dans le référentiel (110) est associée à un premier horodatage, et que la transition de la version particulière du premier jeu de règles du premier état vers le deuxième état est associée à un deuxième horodatage.

2. Procédé selon la revendication 1, comportant la réception, par le biais de l'interface utilisateur intégrée (112), de deuxièmes instructions provenant d'un deuxième utilisateur associé à un deuxième identifiant d'utilisateur ;
en réponse aux deuxièmes instructions provenant du deuxième utilisateur,
la sélection d'un groupe d'au moins deux jeux de règles parmi une pluralité de jeux de règles stockés dans le référentiel (110), chaque jeu de règles étant une version particulière du jeu de règles sélectionnée parmi une pluralité de versions du jeu de règles, et
l'association du groupe de jeux de règles sélectionnées à une étiquette de publication ;
la réception, par le biais de l'interface utilisateur intégrée (112), de troisièmes instructions provenant d'un troisième utilisateur associé à un troisième identifiant d'utilisateur ; et
en réponse aux troisièmes instructions provenant du troisième utilisateur,
la transition de l'étiquette de publication d'un premier état parmi une pluralité d'états vers un deuxième état parmi la pluralité d'états.

3. Procédé selon la revendication 2, comportant le stockage, dans un objet de données de journal (116) associé à l'étiquette de publication :
(i) d'informations spécifiant qu'un utilisateur associé au deuxième identifiant d'utilisateur a sélectionné le groupe de jeux de règles et que l'utilisateur associé au troisième identifiant d'utilisateur a approuvé la transition de l'étiquette de publication du premier état vers le deuxième état, et/ou
(ii) d'informations spécifiant que la sélection du groupe de jeux de règles est associée à un troisième horodatage, et que la transition de l'étiquette de publication du premier état vers le deuxième état est associée à un quatrième horodatage.

4. Procédé selon la revendication 1, dans lequel le premier état indique que le premier jeu de règles est un brouillon encore en cours d'édition, et le deuxième état indique que le premier jeu de règles est prêt à être révisé par un réviseur.

5. Procédé selon la revendication 1, dans lequel le premier état indique que le premier jeu de règles est prêt à être révisé par un utilisateur habilité à approuver la publication du premier jeu de règles, et le deuxième état indique que le premier jeu de règles est au point et prêt à être publié.

6. Procédé selon la revendication 1, dans lequel chaque jeu de règles correspond à un module logiciel et/ou une entité de traitement de données transformant des données d'entrée en données de sortie.

7. Procédé selon la revendication 1, dans lequel le système de développement d'applications intégré (100) comporte un module de contrôle de code source et un module de gestion de processus métier, le module de contrôle de code source traite la sélection de la version particulière du premier jeu de règles, et le module de gestion de processus métier traite la transition de la version particulière du premier jeu de règles du premier état vers le deuxième état.

8. Procédé selon la revendication 7, dans lequel le module de contrôle de code source traite le stockage, dans l'objet de données de journal (116), (i) d'informations spécifiant que le premier utilisateur a sélectionné la version particulière du premier jeu de règles dans le référentiel (110), et/ou (ii) d'informations spécifiant que la sélection de la version particulière du premier jeu de règles dans le référentiel (110) est associée au premier horodatage, et
le module de gestion de processus métier traite le stockage, dans l'objet de données de journal (116), (i) d'informations spécifiant que le premier utilisateur a approuvé la transition de la version particulière du premier jeu de règles du premier état vers le deuxième état, et/ou (ii) d'informations spécifiant que la transition de la version particulière du premier jeu de règles du premier état vers le deuxième état est associée au deuxième horodatage.

9. Procédé selon la revendication 1, comportant le retrait de la version particulière du premier jeu de règles du référentiel (110) et, avant la restitution de la version particulière du premier jeu de règles dans le référentiel (110), le verrouillage de la version particulière du premier jeu de règles stockée dans le référentiel (110) dans le but d'empêcher toute modification, par d'autres utilisateurs, de la version particulière du premier jeu de règles dans le référentiel (110) .

10. Procédé selon la revendication 1, comportant :
la réception, par le biais d'une deuxième interface utilisateur de l'interface utilisateur intégrée (112), d'instructions provenant d'un deuxième utilisateur associé à un deuxième identifiant d'utilisateur ;
en réponse aux instructions provenant du deuxième utilisateur,
la sélection de la version particulière du premier jeu de règles parmi une pluralité de versions du premier jeu de règles stockées dans le référentiel (110), et
la réalisation d'au moins une des opérations suivantes
(i) l'association d'un programme d'application à la version particulière du premier jeu de règles, et la simulation de l'exécution du programme d'application pour traiter des enregistrements d'entrée et produire des sorties selon une ou plusieurs règles de la version particulière du premier jeu de règles, ou
(ii) la récupération de sorties stockées produites par une simulation antérieure de l'exécution d'un programme d'application ayant traité des enregistrements d'entrée pour produire les sorties selon une ou plusieurs règles de la version particulière du premier jeu de règles.

11. Procédé selon la revendication 10, comportant le stockage, dans l'objet de données de journal (116) associé à la version particulière du premier jeu de règles :
(i) des informations spécifiant qu'un utilisateur associé au deuxième identifiant d'utilisateur a sélectionné la version particulière du premier jeu de règles dans le référentiel (110) et que l'utilisateur associé au deuxième identifiant d'utilisateur a simulé l'exécution du programme d'application à l'aide de la version particulière du premier jeu de règles pour produire des sorties, et/ou
(ii) d'informations spécifiant qu'un utilisateur associé au deuxième identifiant d'utilisateur a sélectionné la version particulière du premier jeu de règles dans le référentiel (110) et que l'utilisateur associé au deuxième identifiant d'utilisateur a récupéré des sorties stockées produites par une simulation antérieure de l'exécution du programme d'application à l'aide de la version particulière du premier jeu de règles, et/ou
(iii) d'informations spécifiant que la sélection de la version particulière du premier jeu de règles dans le référentiel (110) est associée à un troisième horodatage, et que la simulation de l'exécution du programme d'application à l'aide de la version particulière du premier jeu de règles pour produire des sorties est associée à un quatrième horodatage, et/ou
(iv) des informations spécifiant que la sélection de la version particulière du premier jeu de règles dans le référentiel (110) est associée à un troisième horodatage, et que la récupération de sorties stockées produites par une simulation antérieure de l'exécution du programme d'application à l'aide de la version particulière du premier jeu de règles est associée à un quatrième horodatage.

12. Procédé selon la revendication 11, dans lequel le système de développement d'applications intégré (100) comporte un module de contrôle de code source et un module de simulation, le module de contrôle de code source traite le stockage, dans l'objet de données de journal (116) :
(i) d'informations spécifiant qu'un utilisateur associé au deuxième identifiant d'utilisateur a sélectionné la version particulière du premier jeu de règles dans le référentiel (110), et/ou
(ii) d'informations spécifiant que la sélection de la version particulière du premier jeu de règles dans le référentiel (110) est associée au premier horodatage, et
le module de simulation traite le stockage, dans l'objet de données de journal (116) :
(i) d'informations spécifiant qu'un utilisateur associé au deuxième identifiant d'utilisateur a simulé l'exécution du programme d'application à l'aide de la version particulière du premier jeu de règles pour produire des sorties, et/ou
(ii) d'informations spécifiant qu'un utilisateur associé au deuxième identifiant d'utilisateur a récupéré des sorties stockées produites par une simulation antérieure de l'exécution du programme d'application à l'aide de la version particulière du premier jeu de règles, et/ou
(iii) d'informations spécifiant que la simulation de l'exécution du programme d'application à l'aide de la version particulière du premier jeu de règles pour produire des sorties est associée au deuxième horodatage, et/ou
(iv) d'informations spécifiant que la récupération de sorties stockées produites par une simulation antérieure de l'exécution du programme d'application à l'aide de la version particulière du premier jeu de règles est associée au deuxième horodatage.

13. Procédé selon la revendication 10, dans lequel le système de développement d'applications intégré (100) comporte un module de contrôle de code source et un module de simulation, le module de contrôle de code source traite la sélection de la version particulière du premier jeu de règles, et le module de simulation traite la simulation de l'exécution du programme d'application pour traiter des enregistrements d'entrée et produire des sorties selon des règles de la version particulière du premier jeu de règles.

14. Procédé selon la revendication 10, dans lequel la première interface utilisateur est fournie au niveau d'un terminal informatique du premier utilisateur et la deuxième interface utilisateur est fournie au niveau d'un terminal informatique du deuxième utilisateur.

15. Procédé selon la revendication 1, comportant :
en réponse aux instructions provenant du premier utilisateur, l'édition de la version particulière du premier jeu de règles ;
le stockage de la version particulière éditée du premier jeu de règles dans le référentiel (110), et
le stockage, dans l'objet de données de journal (116) associé à la version particulière du premier jeu de règles :
(i) d'informations spécifiant que le premier utilisateur a édité la version particulière du premier jeu de règles, et/ou
(ii) d'informations spécifiant que la modification de la version particulière du premier jeu de règles est associée à un troisième horodatage.

16. Procédé selon la revendication 15, dans lequel le système de développement d'applications intégré (100) comporte un module de contrôle de code source, un module de gestion de processus métier et un éditeur de règles,
le module de contrôle de code source traite la sélection de la version particulière du premier jeu de règles,
le module de gestion de processus métier traite la transition de la version particulière du premier jeu de règles du premier état vers le deuxième état, et
l'éditeur de règles traite l'édition de la version particulière du premier jeu de règles.

17. Support lisible par ordinateur stockant un programme informatique pour gérer une ou plusieurs règles à utiliser avec un programme d'application dans un système de traitement de données, le programme informatique comportant des instructions pour amener un système informatique à réaliser les opérations du procédé selon l'une quelconque des revendications 1 à 6.

18. Système de gestion d'une ou de plusieurs règles à utiliser avec un programme d'application, le système comprenant :
un système de stockage de données stockant une ou plusieurs règles ;
au moins un dispositif ou port de sortie pour fournir une interface utilisateur graphique ; et
un système informatique couplé au système de stockage de données et à l'au moins un dispositif ou port de sortie, comportant une circuiterie pour réaliser les opérations du procédé selon l'une quelconque des revendications 1 à 16.
